(19)

**Europäisches Patentamt**

**European Patent Office**

**Office européen des brevets**

(11) **EP 4 635 382 A1**

(12) **EUROPÄISCHE PATENTANMELDUNG**

(43) Veröffentlichungstag:
22.10.2025 Patentblatt 2025/43

(21) Anmeldenummer: 24170838.7

(22) Anmeldetag: 17.04.2024

(51) Internationale Patentklassifikation (IPC):
*A47J 43/07* (2006.01)    *A47J 36/32* (2006.01)

(52) Gemeinsame Patentklassifikation (CPC):
A47J 36/32; A47J 43/0716

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Vorwerk & Co. Interholding GmbH**
**42275 Wuppertal (DE)**

(72) Erfinder:
• **Cornelißen, Markus**
**53332 Bornheim (DE)**
• **Feckler, Gereon**
**41542 Dormagen (DE)**
• **Reiß, Simon**
**51668 Wipperfürth (DE)**

(74) Vertreter: **Von Rohr Patentanwälte Partnerschaft mbB**
**Rüttenscheider Straße 62**
**45130 Essen (DE)**

(54) **KÜCHENMASCHINE ZUR ZUBEREITUNG EINES LEBENSMITTELS UND VERFAHREN ZUM KALIBRIEREN EINES ELEKTRISCHEN HEIZSYSTEMS EINER KÜCHENMASCHINE**

(57)    Es werden eine Küchenmaschine zur Zubereitung eines Lebensmittels und ein Verfahren zum Kalibrieren eines elektrischen Heizsystems einer Küchenmaschine vorgeschlagen, wobei in Abhängigkeit von der Änderung eines Zustandes und/oder dem Eintritt eines Ereignisses über eine Benutzerschnittstelle der Küchenmaschine eine Mitteilung mit einer Aufforderung zur Durchführung eines Korrekturvorgangs ergeht, um die am Standort der Küchenmaschine vorliegende Siedetemperatur eines wässrigen Lebensmittels zu bestimmen. Zusätzlich zum Korrekturvorgang kann ein Kalibriervorgang durchgeführt werden, wobei die Abweichung einer mittels eines Temperaturelements des Heizsystems ermittelten Heiztemperatur zu einer mittels eines Kalibriergeräts ermittelten Messtemperatur bestimmt und als Kalibrierwert elektronisch gespeichert wird.

Fig. 1

EP 4 635 382 A1

## Beschreibung

Die vorliegende Erfindung betrifft ein Verfahren zum Kalibrieren/Betreiben eines Heizsystems einer Küchenmaschine gemäß dem Oberbegriff des Anspruchs 1 und eine Küchenmaschine zur Zubereitung eines Lebensmittels gemäß dem Oberbegriff des Anspruchs 15.

Elektrisch betriebene Küchenmaschinen werden zur zumindest teilweise automatischen Zubereitung von Speisen/Gerichten bzw. zur Bearbeitung, insbesondere zum Erhitzen, Zerkleinern und/oder Mischen, von Lebensmitteln/Zutaten verwendet.

Es ist bei derartigen Küchenmaschinen bekannt, zur Zubereitung von Speisen/Gerichten ein Lebensmittel in einem Gefäß mittels eines elektrischen Heizsystems zu erhitzen, wobei eine (Ziel-)Temperatur des Heizsystems als Führungsgröße vorgegeben und eine (Heiz-)Temperatur als Regelgröße gemessen wird, um den Heizvorgang zu überwachen bzw. das Heizsystem zu regeln.

Die Temperaturmessung bzw. -regelung ist jedoch häufig ungenau. Insbesondere werden die barometrischen Einflüsse am Standort der Küchenmaschine und Einflüsse aufgrund von Fertigungstoleranzen nicht oder nicht ausreichend berücksichtigt, sodass die Temperaturmessung bzw. -regelung, insbesondere die Siedepunkteinstellung, ungenau ist.

Der vorliegenden Erfindung liegt die Aufgabe zugrunde, ein im Vergleich zum Stand der Technik verbessertes Verfahren zum Kalibrieren/Betreiben eines elektrischen Heizsystems einer Küchenmaschine und eine verbesserte Küchenmaschine zur Zubereitung eines Lebensmittels anzugeben, das bzw. die eine sichere und/oder zuverlässige Zubereitung eines Lebensmittels und/oder eine einfache und besonders genaue Temperaturmessung bzw. -regelung ermöglicht oder unterstützt.

Die der Erfindung zugrundeliegende Aufgabe wird durch das Verfahren gemäß Anspruch 1 oder die Küchenmaschine gemäß Anspruch 15 gelöst. Vorteilhafte Weiterbildungen sind Gegenstand der Unteransprüche.

Die vorschlagsgemäße Küchenmaschine ist eine elektrisch betriebene, insbesondere multifunktionale, Vorrichtung zur - insbesondere zumindest teilweise automatische - Zubereitung von Speisen/Gerichten bzw. zur Bearbeitung, insbesondere zum Erhitzen, Zerkleinern und/oder Mischen, von Lebensmitteln/Zutaten.

Zu diesem Zweck weist die vorschlagsgemäße Küchenmaschine ein optionales Gefäß zur Aufnahme des Lebensmittels, ein elektrisches Heizsystem zum Erhitzen des Lebensmittels und/oder einen Rührer zum Umrühren/Mischen und/oder Zerkleinern des Lebensmittels auf.

Die Küchenmaschine kann jedoch auch eine sonstige elektrisch betriebene Maschine zur Zubereitung bzw. Bearbeitung, insbesondere zum Erhitzen, eines Lebensmittels sein, wie ein Herd, Backofen, eine Mikrowelle, ein Grill und/oder ein Wasserkocher.

Bei dem vorschlagsgemäßen Verfahren zum (teilautomatisierten) Kalibrieren/Betreiben der Küchenmaschine, insbesondere des elektrischen Heizsystems der Küchenmaschine, wird in einem Korrektur- bzw. Referenzierungsvorgang und/oder während der Zubereitung des Lebensmittels die am Standort/Betriebsort der Küchenmaschine vorliegende (tatsächliche) Siedetemperatur des Lebensmittels insbesondere mittels einer Messeinrichtung bestimmt, wobei die Abweichung der bestimmten Siedetemperatur zu einer insbesondere elektronisch gespeicherten Referenztemperatur als Korrekturwert elektronisch in einem Datenspeicher gespeichert wird. Der auf diese Weise ermittelte Korrekturwert wird vorzugsweise automatisch bei der (nächsten) Zubereitung des Lebensmittels berücksichtigt. Insbesondere wird beim Erhitzen des Lebensmittels auf die Siedetemperatur die um den Korrekturwert korrigierte Referenztemperatur als Zieltemperatur verwendet.

Gemäß einem ersten, auch unabhängig realisierbaren Aspekt der vorliegenden Erfindung wird mittels der Küchenmaschine, insbesondere einer Datenverarbeitungseinrichtung der Küchenmaschine, automatisch ein vordefinierter Zustand bzw. die Änderung eines vordefinierten Zustands und/oder ein vordefiniertes Ereignis bzw. der Eintritt eines vordefinierten Ereignisses überwacht, um eine mögliche Änderung des Korrekturwertes festzustellen. In Abhängigkeit von der Überwachung, insbesondere bei Änderung des Zustandes und/oder Eintritt des Ereignisses, ergeht über eine Benutzerschnittstelle der Küchenmaschine eine optische, akustische und/oder haptische Mitteilung mit einer Aufforderung zur (erneuten) Durchführung des Korrekturvorgangs.

Auf diese Weise wird gewährleistet, dass der Korrekturvorgang nicht nur einmalig, sondern ereignisabhängig bzw. zustandsabhängig wiederholt durchgeführt wird, sodass eine genaue Temperaturmessung bzw. -regelung, insbesondere mit einer (Standard-)Messunsicherheit von 1 °C oder weniger, dauerhaft gewährleistet wird.

Ein überwachter Zustand kann ein vordefiniertes Zeitintervall sein. Insbesondere kann nach Ablauf eines vordefinierten Zeitintervalls nach dem letzten Korrekturvorgang und/oder nach der letzten Benutzung der Küchenmaschine, beispielsweise von sechs oder zwölf Monaten, über die Benutzerschnittstelle die Aufforderung zur (erneuten) Durchführung des Korrekturvorgangs ergehen. Auf diese Weise können etwaige Alterungseffekte insbesondere der elektronischen und/oder wärmeführenden Komponenten kompensiert werden.

Zusätzlich oder alternativ kann ein (weiterer) überwachter Zustand eine bestehende Datenverbindung zwischen der Küchenmaschine und einem oder mehreren (externen) Geräten und/oder ein überwachtes Ereignis eine neue Datenverbindung zwischen der Küchenmaschine und einem oder mehreren (externen) Geräten sein. Insbesondere kann nach (erstmaligem) Herstellen einer (neuen) Datenverbindung die Aufforderung zur (erneuten) Durchführung des Korrekturvorgangs ergehen. Auf diese Weise wird insbesondere ohne die Verwendung zusätzlicher Sensorik, wie eines GPS-Sensors und/oder eines Barometers, ein möglicher Standortwechsel detektiert. An einem neuen Standort kann nämlich aufgrund einer anderen Höhenlage ein anderer Luftdruck und somit auch eine andere Siedetemperatur vorherrschen.

Darüber hinaus kann ein (weiteres) überwachtes Ereignis durch den Hersteller der Küchenmaschine hervorgerufen werden. Beispielsweise kann eine Softwareaktualisierung bzw. ein Over-the-Air-Update ein (weiteres) überwachtes Ereignis sein. Nach der Durchführung einer Softwareaktualisierung bzw. eines Over-the-Air-Updates kann dann eine Aufforderung zur (erneuten) Durchführung des Korrekturvorgangs ergehen.

Die vorschlagsgemäße Küchenmaschine weist eine Basisstation für ein Gefäß auf, wobei die Basisstation und das Gefäß elektrisch und/oder mechanisch miteinander verbunden oder verbindbar sind, insbesondere um ein Erhitzen und/oder Mischen/Umrühren des Lebensmittels in dem Gefäß zu ermöglichen.

Vorzugsweise können unterschiedliche (baugleiche) Gefäße mit der Basisstation verwendet bzw. verbunden werden.

Aufgrund von Fertigungstoleranzen können sich die Temperaturmessungen und -regelungen für jedes Gefäß unterscheiden. Selbst bei Verwendung mit derselben Basisstation an einem Standort kann bei einem ersten Gefäß der Messwert für die Siedetemperatur von dem Messwert für die Siedetemperatur bei einem zweiten Gefäß abweichen. Deshalb ist auch die jeweilige Temperaturregelung anzupassen, um eine zuverlässige und reproduzierbare Zubereitung des Lebensmittels unabhängig vom verwendeten Gefäß zu gewährleisten.

Vor diesem Hintergrund ist bevorzugt, dass für jedes Gefäß der Korrekturvorgang durchgeführt wird, wobei den Gefäßen der jeweils bestimmte Korrekturwert der Siedetemperatur zugeordnet wird bzw. der jeweils bestimmte Korrekturwert als gefäßspezifischer Wert elektronisch gespeichert wird.

Vorzugsweise weist das Gefäß eine Kennung bzw. einen Identifikator, wie eine Seriennummer, auf. Die Kennung bzw. der Identifikator kann beispielsweise als Transponder, insbesondere RFID-Chip, und/oder als Barcode im bzw. am Gefäß vorgesehen sein. Zusätzlich oder alternativ kann die Kennung bzw. der Identifikator elektronisch in einem Datenspeicher des Gefäßes gespeichert sein, der durch eine Datenschnittstelle ausgelesen wird.

Mittels der Datenschnittstelle kann eine Kommunikation zwischen der Basisstation und dem Gefäß erfolgen bzw. das Gefäß datentechnisch zum Datenaustausch bzw. zur Signalübertragung mit der Basisstation gekoppelt werden.

Die Küchenmaschine identifiziert vorzugsweise automatisch das verwendete bzw. in die Basisstation eingesetzte Gefäß, beispielsweise mittels eines integrierten Lesegeräts, wie eines Barcodelesegeräts, einer Kamera oder eines RFID-Lesegeräts. Der dem verwendeten/eingesetzten Gefäß zugeordnete Korrekturwert kann dann abgerufen und bei der Zubereitung des Lebensmittels automatisch berücksichtigt werden.

Optional ist ein (weiterer) überwachter Zustand die Verwendung mit einem bereits identifizierten Gefäß und/oder ein (weiteres) überwachtes Ereignis die erstmalige Verwendung mit einem neuen bzw. (noch) nicht identifizierten Gefäß. Insbesondere kann nach erstmaliger Identifikation bzw. Verwendung eines Gefäßes die Aufforderung zur (erneuten) Durchführung des Korrekturvorgangs ergehen.

Es ist also vorgesehen, für jedes verwendete Gefäß einen Korrekturwert mittels eines Korrekturvorgangs zu bestimmen und elektronisch in dem Datenspeicher zu speichern. Bei der Zubereitung des Lebensmittels wird dann das verwendete Gefäß automatisch identifiziert und der zugeordnete Korrekturwert berücksichtigt. Auf diese Weise wird eine besonders sichere, zuverlässige und reproduzierbare Zubereitung des Lebensmittels ermöglicht.

Für den Korrekturvorgang ergeht insbesondere über die Benutzerschnittstelle eine Mitteilung mit einer Aufforderung, eine vordefinierte Menge eines wässrigen Lebensmittels, wie Wasser, in das verwendete Gefäß zu füllen, vorzugsweise wobei die Menge bzw. das Gewicht des Lebensmittels automatisch über eine Messeinrichtung der Küchenmaschine bestimmt und einem Nutzer über die Benutzerschnittstelle mitgeteilt werden kann.

Anschließend wird das Lebensmittel vorzugsweise nach einer Nutzereingabe mittels des Heizsystems zum Sieden gebracht/erhitzt, wobei die Siedetemperatur automatisch mittels der Küchenmaschine, insbesondere der Messeinrichtung, erkannt wird. Vorzugsweise wird zu diesem Zweck während des Korrekturvorgangs der Temperaturgradient, insbesondere die Änderung des Temperaturgradienten, mit einem (vordefinierten) Grenzwert verglichen, um das Erreichen der vorliegenden Siedetemperatur zu identifizieren.

Das Erreichen der Siedetemperatur wird vorzugsweise dadurch detektiert, dass der Anstieg der gemessenen Heiztemperatur abnimmt und/oder die gemessene Heiztemperatur für einen vordefinierten Zeitraum zumindest im Wesentlichen konstant ist, also der Temperaturgradient einen vordefinierten Grenzwert erreicht oder unterschreitet.

Die Abweichung zwischen einer vorzugsweise elektronisch gespeicherten Referenztemperatur, wie 100 °C, und der bei Erreichen der detektierten Siedetemperatur mittels der Messeinrichtung bzw. des Temperaturelements ermittelten Heiztemperatur wird als Korrekturwert elektronisch in dem Datenspeicher gespeichert.

Der auf diese Weise ermittelte Korrekturwert wird bei der Zubereitung eines Lebensmittels, insbesondere bei Erhitzen des Lebensmittels auf die Siedetemperatur, berücksichtigt. Insbesondere wird dazu die um den Korrekturwert korrigierte Referenztemperatur als Zieltemperatur (Führungsgröße) verwendet.

Es ist beim Betrieb bzw. bei der Regelung des Heizsystem vorgesehen, dass die Heizleistung des Heizsystems bei Erreichen der Siedetemperatur bzw. der um den Korrekturwert korrigierten Referenztemperatur automatisch reduziert wird, insbesondere um einen zu hohen Energieeintrag, einen Druckaufbau in der Küchenmaschine bzw. dem Gefäß und/oder ein Anbrennen des Lebensmittels zu vermeiden und/oder die Energieeffizienz zu verbessern.

Durch die Verwendung des Korrekturwerts bei der Zubereitung des Lebensmittels können Abweichungen des Siedepunkts aufgrund von Fertigungstoleranzen sowie aufgrund der topografischen Höhe bzw. des Standorts der Küchenmaschine zuverlässig ausgeglichen werden.

Wie bereits erläutert, führen insbesondere Fertigungstoleranzen der elektronischen Bauteile, wie des Temperaturelements, und Abweichungen durch die Verbindung der wärmeführenden Bauteile der Küchenmaschine zu Abweichungen zwischen der gemessenen Heiztemperatur und der tatsächlichen Temperatur des erhitzten Lebensmittels.

Gemäß einem weiteren, auch unabhängigen realisierbaren Aspekt der vorliegenden Erfindung wird zusätzlich zum, insbesondere vor dem, Korrekturvorgang ein Kalibriervorgang durchgeführt, wobei die Abweichung einer insbesondere mittels der Messeinrichtung bzw. des Temperaturelements ermittelten Heiztemperatur zu einer mittels eines (externen) Mess- bzw. Kalibiergeräts ermittelten Messtemperatur bestimmt und als Kalibrierwert elektronisch in dem Datenspeicher gespeichert wird. Der auf diese Weise ermittelte Kalibrierwert kann dann bei der Zubereitung des Lebensmittels berücksichtigt werden. Insbesondere kann der Messwert für die Heiztemperatur um den Kalibierwert korrigiert und als Führungsgröße bei der (Temperatur-)Regelung verwendet werden.

Der Kalibriervorgang kann beispielsweise herstellerseitig bzw. bei der Herstellung der Küchenmaschine, beispielsweise am Ende der Produktionslinie, oder durch den Nutzer bzw. am Standort/Betriebsort der Küchenmaschine durchgeführt werden.

Bei dem Kalibriervorgang wird vorzugsweise ein (geeichtes) Mess- bzw. Kalibriergerät, insbesondere ein Temperatursensor des Kalibriergeräts, in das Gefäß eingeführt, und zwar vorzugsweise an die Stelle, an der sich die Messeinrichtung, insbesondere das Temperaturelement der Messeinrichtung, befindet. Anschließend wird das Heizsystem aktiviert und mehrere (unterschiedliche) Messtemperaturwerte mittels des Kalibriergeräts und mehrere Heiztemperaturwerte mittels des Temperaturelements gemessen. Die auf diese Weise gemessenen Heiztemperaturwerte werden den korrespondierenden Messtemperaturwerten zugeordnet.

Die (gemittelte) Differenz/Abweichung zwischen den Messtemperaturwerten und den Heiztemperaturwerten werden für jede Küchenmaschine bzw. jedes Gefäß als Kalibrierwert für die Temperaturmessung bzw. -regelung elektronisch gespeichert.

Durch die Kombination des Kalibiervorgangs und des Korrekturvorgangs wird einerseits erreicht, dass mittels der Messeinrichtung bzw. des Temperaturelements die wahre/tatsächliche Heiztemperatur gemessen und optional über die Benutzerschnittstelle angezeigt wird. Andererseits wird erreicht, dass die Zieltemperatur nicht höher als die tatsächliche Siedetemperatur ist, sodass das Lebensmittel nicht zu stark erhitzt und gegebenenfalls kritische Druckzustände in der Küchenmaschine bzw. in dem Gefäß entstehen.

Es ist vorgesehen, dass anhand einer Benutzereingabe über die Benutzerschnittstelle der Küchenmaschine ein Rezept zur Zubereitung des Lebensmittels ausgewählt wird, wobei anhand des ausgewählten Rezepts das Lebensmittel mittels der Küchenmaschine zumindest teilweise automatisch zubereitet wird.

Gemäß einem weiteren, auch unabhängig realisierbaren Aspekt der vorliegenden Erfindung wird beim Erhitzen des Lebensmittels auf die Siedetemperatur des Lebensmittels in Abhängigkeit vom ausgewählten Rezept und/oder Lebensmittel automatisch die Abweichung der (tatsächlichen) Siedetemperatur von der Referenztemperatur bestimmt.

Insbesondere wird die Abweichung der Siedetemperatur von der Referenztemperatur nur bei vordefinierten Rezepten und/oder Lebensmitteln bestimmt.

Beispielsweise kann den Rezepten und/oder Lebensmitteln eine (Meta-)Information zugeordnet werden, wie eine elektronisch gespeicherte Kennzeichnung, wobei in Abhängigkeit von der Information beim Erhitzen des Lebensmittels die Abweichung bestimmt wird.

Zusätzlich oder alternativ kann vorgesehen sein, dass die Abweichung nur dann bestimmt wird, wenn das Lebensmittel einen vordefinierten Massenanteil, insbesondere von mindestens 50 %, von Wasser aufweist.

Insbesondere eignen sich wasserbasierte Rezepte, beispielsweise zur Zubereitung von Reis, Nudeln, Kartoffeln o.dgl., um (zuverlässig) die Siedetemperatur zu identifizieren bzw. die Abweichung der vorliegenden Siedetemperatur zu der Referenztemperatur während der Zubereitung zu bestimmen.

Gemäß dieser Verfahrensvariante ist folglich kein separater Korrekturvorgang durchzuführen bzw. wird der Korrekturvorgang in die Zubereitung von vordefinierten Rezepten bzw. von vordefinierten Lebensmitteln integriert. Insbesondere wird bei der Zubereitung von vordefinierten Rezepten bzw. von vordefinierten Lebensmitteln automatisch bestimmt, ob sich der Korrekturwerkt geändert hat bzw. haben könnte.

Mit anderen Worten kann ein (weiteres) überwachtes Ereignis die Rezept- und/oder Lebensmittelauswahl sein, sodass bei der Auswahl des vordefinierten Rezepts- und/oder Lebensmittels der Korrekturvorgang vorzugsweise automatisch bei der Zubereitung des Lebensmittels durchgeführt wird.

Bei dieser Verfahrensvariante ergeht vorzugsweise keine Mitteilung mit einer Aufforderung zur Durchführung des Korrekturvorgangs.

Es ist jedoch auch möglich, dass eine Aufforderung zur (manuellen) Durchführung des Korrekturvorgangs ergeht, wenn die Differenz der während der Zubereitung bestimmten Abweichung von dem zuletzt verwendeten bzw. vorherigen Korrekturwert einen vordefinierten Grenzwert erreicht oder überschreitet.

Es wird in diesem Fall folglich durch die Küchenmaschine selbstständig prüft, ob ein Korrekturvorgang durch einen Nutzer durchgeführt werden muss.

Wie bereits erläutert, wird durch das vorschlagsgemäße Verfahren eine besonders genaue Temperaturmessung bzw. -regelung ermöglicht und zudem sichergestellt, dass bestimmte Temperaturgrenzen nicht überschritten oder unterschritten werden. Auf diese Weise werden die notwendige Lebensmittelsicherheit und ein reproduzierbares Zubereitungsergebnis insbesondere in Hinblick auf Textur, Qualität, Geschmack und Aromen des Lebensmittels ermöglicht oder unterstützt.

Durch das vorschlagsgemäße Verfahren wird darüber hinaus die Möglichkeit zum Garen, insbesondere zum Vakuumgaren bzw. Sous-Vide-Garen verbessert. Diese Form des Garens erfordert eine sehr gute Temperaturregelgenauigkeit sowie das Einhalten bestimmter Temperaturobergrenzen, die je nach verwendetem Lebensmittel variieren können.

Im Ergebnis kann durch das vorschlagsgemäße Verfahren die Temperatur im Vergleich zum Stand der Technik besonders genau gemessen bzw. geregelt werden. Insbesondere kann der Siedepunkt dauerhaft präzise eingestellt werden, unabhängig von etwaigen barometrischen Einflüssen, Fertigungstoleranzen und Alterungsprozessen.

Die vorschlagsgemäße Küchenmaschine ist zur Durchführung des vorschlagsgemäßen Verfahrens ausgebildet. Auf diese Weise werden entsprechende Vorteile realisiert.

Gemäß einem weiteren, auch unabhängigen Aspekt der vorliegenden Erfindung weist die Küchenmaschine, insbesondere die Basisstation und/oder das Gefäß, einen Datenspeicher auf, wobei in dem Datenspeicher für jedes Gefäß ein Korrekturwert für die Abweichung der vorliegenden Siedetemperatur zu der Referenztemperatur und/oder ein Kalibrierwert für die Abweichung der mittels eines Temperaturelements des Heizsystems ermittelten Heiztemperatur zu einer mittels eines (externen) Mess- bzw. Kalibriergeräts ermittelten Messtemperatur gespeichert sind/ist. Auf diese Weise werden entsprechende Vorteile realisiert.

Die vorliegende Erfindung betrifft darüber hinaus ein Computerprogrammprodukt, umfassend Befehle, die zur Ausführung des Programms durch einen Computer bzw. durch die Küchenmaschine diesen bzw. diese veranlasst, dass hierin beschriebene Verfahren oder einzelne Verfahrensschritte auszuführen.

Schließlich betrifft die vorliegende Erfindung ein computerlesbares Speichermedium, umfassend das Computerprogrammprodukt und/oder Befehle, die bei der Ausführung durch einen Computer bzw. die Küchenmaschine diesen bzw. diese veranlassen, das hierin beschriebene Verfahren und/oder einzelne Verfahrensschritte auszuführen.

Unter dem Begriff "Lebensmittel" im Sinne der vorliegenden Erfindung ist vorzugsweise ein Nahrungsmittel und/oder ein Genussmittel für den Verzehr zu verstehen. Lebensmittel können beispielsweise Produkte pflanzlichen Ursprungs, wie Gemüse, Obst und/oder ein Getreidetrockenprodukt, und/oder Produkte tierischen Ursprungs, wie Eier, Fleischwaren und/oder Milchprodukte, sein.

Ein Lebensmittel im Sinne der vorliegenden Erfindung kann ein Anfangs-, Zwischen- und/oder Endprodukt für den Verzehr bzw. für eine Speise und/oder ein Gericht sein. Insbesondere kann ein Lebensmittel im Sinne der vorliegenden Erfindung eine Zutat für eine Speise und/oder ein Gericht bilden und/oder selbst durch mehrere Lebensmittel gebildet sein.

Unter dem Begriff "Kalibrieren" bzw. "Kalibriervorgang" im Sinne der vorliegenden Erfindung ist vorzugsweise ein (unabhängiger) Verfahrensschritt bzw. -vorgang zu verstehen, bei dem ein oder mehrere insbesondere durch eine Messeinrichtung der Küchenmaschine ermittelte Werte für eine Heiztemperatur einem oder mehrere insbesondere durch ein externes Mess- bzw. Kalibriergerät ermittelten Werten für eine Lebensmittel- bzw. Messtemperatur zugeordnet werden, insbesondere um die Differenz zwischen den Werten für die Heiztemperatur und den Werten für die Lebensmittel- bzw. Messtemperatur als Kalibrierwert elektronisch zu speichern und bei der Zubereitung des Lebensmittels zu berücksichtigen.

Unter dem Begriff "Korrekturvorgang" im Sinne der vorliegenden Erfindung ist vorzugsweise ein (unabhängiger) Verfahrensschritt bzw. -vorgang zu verstehen, bei dem die - insbesondere durch barometrische Einflüsse oder durch Alterungseffekte der elektronischen und/oder wärmeführenden Komponenten hervorgerufene - Abweichung der tatsächlichen bzw. an dem Standort der Küchenmaschine vorliegenden Siedetemperatur zu einer insbesondere elektronisch gespeicherten Referenztemperatur, wie 100 °C, ermittelt und als Korrekturwert elektronisch gespeichert wird, insbesondere um den Korrekturwert bei der Zubereitung des Lebensmittels zu berücksichtigen.

Unter dem Begriff "Siedetemperatur" ist vorzugsweise diejenige Temperatur eines wässrigen Lebensmittels, wie Wasser, zu verstehen, bei der das Lebensmittel siedet/kocht und/oder der Siedepunkt bzw. der Phasenübergang von der flüssigen in die gasförmige Phase vorliegt.

Die Siedetemperatur ist vom atmosphärischen Druck bzw. Umgebungsdruck abhängig. Je höher der Umgebungsdruck, desto höher ist auch die Siedetemperatur. Da der Umgebungsdruck von der topografischen Höhe bzw. der Höhe über dem Meeresspiegel abhängt, sinkt die Siedetemperatur mit zunehmender Höhe über dem Meeresspiegel.

Bei einem atmosphärischen Druck von ca. 1013 hPa bzw. einer Höhe von 0 Meter über dem (mittleren) Meeresspiegel beträgt die Siedetemperatur von Wasser zumindest im Wesentlichen 100 °C (Normalsiede- bzw. Referenztemperatur).

Bei einem atmosphärischen Druck von ca. 789 hPa bzw. einer Höhe von 2000 Metern über dem (mittleren) Meeresspiegel sinkt die Siedetemperatur von Wasser im Vergleich zur Normalsiede- bzw. Referenztemperatur um 7 °C bzw. auf zumindest im Wesentlichen 93 °C.

Unter dem Begriff "Korrekturwert" im Sinne der vorliegenden Erfindung ist vorzugsweise die (mittlere) Abweichung/Differenz zwischen der tatsächlichen/vorliegenden Siedetemperatur bzw. der bei Erreichen der vorliegenden/tatsächlichen Siedetemperatur ermittelten Heiztemperatur und einer Referenztemperatur, insbesondere 100 °C, zu verstehen.

Unter dem Begriff "Kalibrierwert" im Sinne der vorliegenden Erfindung ist vorzugsweise die (mittlere) Abweichung/Differenz zwischen der mittels eines Temperaturelements des Heizsystems ermittelten Heiztemperatur und einer mittels eines (geeichten) Mess- bzw. Kalibriergeräts ermittelten Lebensmittel- bzw. Messtemperatur zu verstehen.

Der Kalibrierwert gibt folglich an, wie groß die mittels des Temperaturelements ermittelte Heiztemperatur von der tatsächlichen Temperatur des Lebensmittels in der Küchenmaschine bzw. im Gefäß abweicht.

Für eine Temperatur bzw. einen Temperaturbereich können unterschiedliche Kalibrierwerte vorliegen, sodass wahlweise ein gemittelter Kalibierwert oder bestimmten Temperaturen bzw. Temperaturbereichen zugeordnete Kalibrierwerte verwendet werden können.

Die vorgenannten Aspekte, Merkmale und/oder Verfahrensschritte bzw. -varianten der vorliegenden Erfindung sowie die sich aus den Ansprüchen und der nachfolgenden Beschreibung ergebenden Aspekte, Merkmale und Verfahrensschritte bzw. -varianten der vorliegenden Erfindung können grundsätzlich unabhängig voneinander, aber auch in beliebiger Kombination bzw. Reihenfolge realisiert werden, sofern im Folgenden nicht anders erläutert.

Weitere Aspekte, Vorteile, Merkmale und Eigenschaften der vorliegenden Erfindung ergeben sich aus den Ansprüchen und der nachfolgenden Beschreibung einer bevorzugten Ausführungsform anhand der Figuren. Es zeigt:

Fig. 1 eine schematische Seitenansicht einer vorschlagsgemäßen Küchenmaschine mit einem eingeführten Temperatursensor eines Mess- bzw. Kalibiergeräts zur Durchführung eines Kalibriervorgangs;

Fig. 2 ein schematisches Diagramm mit dem zeitlichen Verlauf der gemessenen Heiztemperatur und der tatsächlichen Temperatur eines Mediums;

Fig. 3 ein schematisches Diagramm mit einem zeitlichen Verlauf einer Heiztemperatur beim Erhitzen von Wasser an verschiedenen Standorten mit unterschiedlicher Höhe über dem Meeresspiegel; und

Fig. 4 ein schematisches Ablaufdiagramm eines vorschlagsgemäßen Verfahrens zum Kalibrieren/Betreiben eines Heizsystems einer Küchenmaschine.

In den teilweise nicht maßstabsgerechten, nur schematischen Figuren werden für gleiche, gleichartige oder ähnliche Bauteile und Komponenten dieselben Bezugszeichen verwendet, wobei entsprechend oder vergleichbare Eigenschaften und Vorteile erreicht werden, auch wenn von einer wiederholten Beschreibung abgesehen wird.

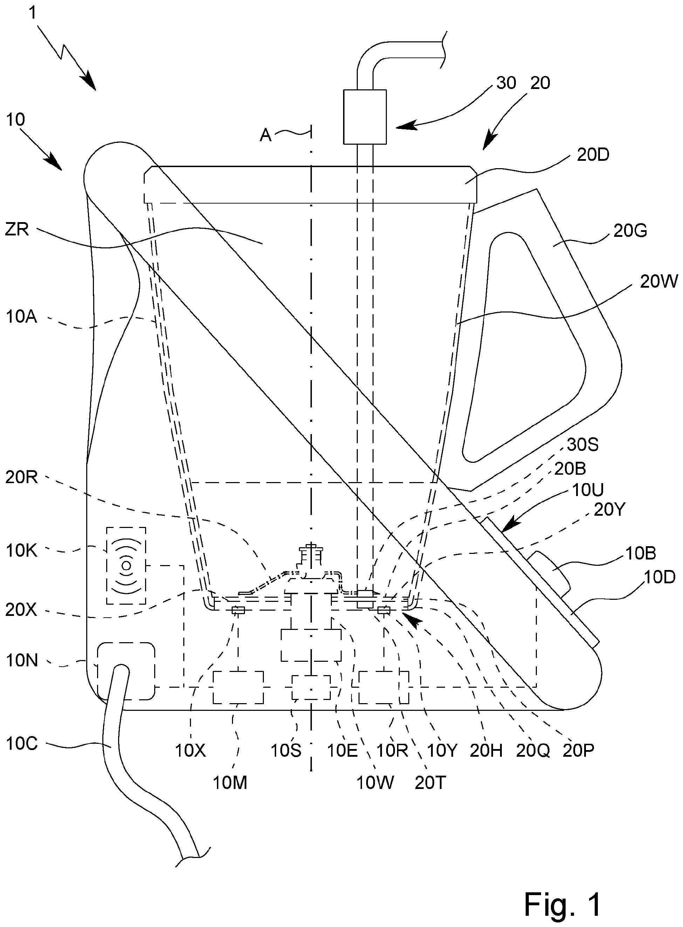

Fig. 1 zeigt eine vorschlagsgemäße Küchenmaschine 1 zur Zubereitung bzw. Bearbeitung eines Lebensmittels, insbesondere zur Zubereitung von Speisen/Gerichten und/oder Bestandteilen davon.

Bei der Küchenmaschine 1 handelt es sich vorzugsweise um eine elektrisch betriebene Multifunktions-Küchenmaschine, die zum Zerkleinern, Rühren bzw. Mischen und/oder Erhitzen bzw. Kochen eines Lebensmittels ausgebildet ist.

Die Küchenmaschine 1 weist vorzugsweise eine Basisstation 10 und/oder ein Gefäß 20 zur Aufnahme von Lebensmitteln auf.

Vorzugsweise können unterschiedliche Gefäße 20 mit der Basisstation 10 verwendet werden, wobei die Gefäße 20 baugleich ausgebildet sind oder unterschiedliche Eigenschaften und/oder Funktionen aufweisen. Beispielsweise kann ein (erstes) Lebensmittel in einem ersten Gefäß 20 und anschließend ein (zweites) Lebensmittel in einem zweiten Gefäß 20 zubereitet werden.

Die Basisstation 10 und das Gefäß 20 sind vorzugsweise elektrisch und/oder mechanisch miteinander verbunden oder verbindbar, insbesondere um ein Erhitzen und/oder Mischen/Umrühren des Lebensmittels in dem Gefäß 20 zu ermöglichen. Es sind darüber hinaus auch Lösungen möglich, bei denen die Basisstation 10 und/oder das Gefäß 20 zusätzlich fluidisch miteinander verbunden oder verbindbar sind, beispielsweise um in der Basisstation 10 erzeugten Wasserdampf in das Gefäß 20 zu leiten.

Fig. 1 zeigt die Küchenmaschine 1 im üblichen Gebrauchszustand bzw. in der Anschlussposition, in der das Gefäß 20 elektrisch und/oder mechanisch an die Basisstation 10 angeschlossen ist. In dieser Position wird vorzugsweise ein Korrekturvorgang durchgeführt, um die am Standort der Küchenmaschine 1 vorliegende Siedetemperatur ST des Lebensmittels zu bestimmen, wie im Folgenden noch näher erläutert wird.

Die Basisstation 10 weist eine Aufnahme 10A auf, um das Gefäß 20 zumindest teilweise und/oder bodenseitig aufzunehmen. Besonders bevorzugt ist das Gefäß 20 zumindest teilweise in die Basisstation 10 einsetzbar, aufstellbar oder einhängbar, um das Gefäß 20 mechanisch und/oder elektrisch mit der Basisstation 10 zu verbinden.

Das Gefäß 20 weist eine Wandung 20W, einen Boden 20B und einen Zubereitungsraum ZR auf, wobei die Wandung 20W den Zubereitungsraum ZR radial bzw. seitlich und der Boden 20B den Zubereitungsraum ZR axial bzw. von unten begrenzt.

Das Gefäß 20 weist einen optionalen Deckel 20D auf, um den Zubereitungsraum ZR axial bzw. von oben zu begrenzen und/oder insbesondere drucksicher zu verschließen.

Um die Handhabung des Gefäßes 20 zu erleichtern, ist das Gefäß 20 mit einem optionalen Griff 20G ausgestattet.

Bei der dargestellten Ausbildungsform ist das Gefäß 20 zumindest im Wesentlichen rund bzw. zylinderförmig ausgebildet. Es sind jedoch grundsätzlich auch Ausführungsformen möglich, bei denen das Gefäß 20 eckig, insbesondere rechteckig, ausgebildet ist.

Das Gefäß 20 weist eine Mittelachse A auf, wobei die Mittelachse A mittig durch das Gefäß 20 bzw. dem Zubereitungsraum ZR verläuft, wie in Fig. 1 angedeutet.

Vorzugsweise ist die Mittelachse A eine Längs- oder Symmetrieachse des vorzugsweise länglichen, zylindrischen und/oder zumindest im Wesentlichen rotationssymmetrischen Gefäßes 20.

Bei der dargestellten Ausführungsform ist das Gefäß 20 mit einem Rührer 20R ausgestattet, insbesondere um das Lebensmittel im Zubereitungsraum ZR zu zerkleinern oder zu (durch-)mischen.

Der Rührer 20R ist vorzugsweise am Boden 20B des Gefäßes 20 angeordnet bzw. drehbar gelagert. Der Rührer 20R weist vorzugsweise mehrere, insbesondere austauschbare, Rührblätter auf.

Die Rührblätter weisen vorzugsweise Schneiden auf oder sind als Schneiden ausgebildet, um das Lebensmittel zu zerkleinern.

Vorzugsweise entspricht die Mittelachse A des Gefäßes 20 der Drehachse des Rührers 20R.

Vorzugsweise ist das Gerät 20 mechanisch mit der Basisstation 10 verbunden oder verbindbar, um den Rührer 20R mittels der Basisstation 10 anzutreiben.

Zum Antrieb des Rührers 20R weist die Küchenmaschine 1, insbesondere die Basisstation 10, einen Elektromotor 10E auf, der über eine Welle 10W mit dem Rührer 20R verbunden oder verbindbar ist und/oder - in der Anschlussposition des Gefäßes 20 - von unten formschlüssig in den Boden 20B eingreift.

Wie eingangs bereits erläutert, ist die Küchenmaschine 1 dazu ausgebildet, Lebensmittel bzw. ein Medium im Gefäß 20 bzw. im Zubereitungsraum ZR zu erhitzen.

Zu diesem Zweck ist das Gefäß 20 bzw. der Zubereitungsraum ZR elektrisch beheizbar bzw. weist die Küchenmaschine 1 ein elektrisches Heizsystem 20H auf.

Das Heizsystem 20H ist zum (unmittelbaren) Erhitzen des Gefäßes 20, insbesondere des Bodens 20B und/oder des Zubereitungsraums ZR, ausgebildet. Besonders bevorzugt ist das Heizsystem 20H als Dickschichtheizung ausgebildet.

Bei der dargestellten Ausführungsform ist das Heizsystem 20H in das Gefäß 20, insbesondere den Boden 20B, integriert bzw. bildet das Heizsystem 20H oder einen Teil des Heizsystems 20H den Boden 20B des Gefäßes 20 oder einen Teil davon. Es sind jedoch auch konstruktive Lösungen möglich, bei denen die Basisstation 10 das Heizsystem 20H aufweist oder bildet.

Um eine Stromversorgung der Basisstation 10 und/oder des Gefäßes 20, insbesondere des Heizsystems 20H und/oder des Elektromotors 10E, zu ermöglichen, ist die Küchenmaschine 1, insbesondere die Basisstation 10, mit einem Netzteil 10N - vorzugsweise mit einer entsprechenden Ladeelektronik - und/oder einem Netzkabel 10C zum Anschluss an ein Stromnetz ausgestattet.

Vorzugsweise weist die Basisstation 10 einen oder mehrere elektrische Anschlüsse 10X bzw. 10Y für das Gefäß 20 auf, um das Gefäß 20 - in der Anschlussposition - elektrisch mit der Basisstation 10 bzw. dem Netzteil 10N zu verbinden bzw. mit elektrischer Energie zu versorgen.

Die elektrischen Anschlüsse 10X bzw. 10Y ist bzw. sind vorzugsweise in die Aufnahme 10A der Basisstation 10 integriert, insbesondere derart, dass durch Einsetzen oder Aufsetzen des Gefäßes 20 in die Basisstation 10 automatisch eine elektrische Verbindung zwischen dem Gefäß 20 und der Basisstation 10 hergestellt wird.

Das Gefäß 20 weist vorzugsweise einen oder mehrere zu dem elektrischen Anschluss 10X bzw. 10Y korrespondierende elektrische Anschlüsse 20X bzw. 20Y auf, vorzugsweise wobei die elektrischen Anschlüsse 20X bzw. 20Y auf einer Unterseite des Gefäßes 20 bzw. des Bodens 20B angeordnet sind, wie in Fig. 1 angedeutet.

Die elektrischen Anschlüsse 10X bzw. 10Y und 20X bzw. 20Y sind vorzugsweise durch einen oder mehrere elektrische Kontakte oder - insbesondere für eine drahtlose Energieübertragung - durch eine oder mehrere Spulen gebildet.

Die Küchenmaschine 1, insbesondere die Basisstation 10, weist vorzugsweise eine Benutzerschnittstelle 10U, eine Datenverarbeitungseinrichtung 10R, eine Steuereinrichtung 10S, eine Kommunikationseinrichtung 10K und/oder eine Messeinrichtung 10M auf, vorzugsweise wobei die Benutzerschnittstelle 10U, die Datenverarbeitungseinrichtung 10R, die Steuereinrichtung 10S, die Kommunikationseinrichtung 10K, die Messeinrichtung 10M, das Netzteil 10N, das Heizsystem 20H, der Elektromotor 10E und/oder die Anschlüsse 10X, 10Y elektrisch miteinander verbunden sind, wie in Fig. 1 durch Strichlinien angedeutet.

Die Benutzerschnittstelle 10U ist durch mindestens eine Anzeigeeinrichtung 10B, wie ein Bildschirm oder ein Touchscreen, und/oder mindestens eine Eingabeeinrichtung 10B, insbesondere ein Bedienelement, wie einen Drehknopf, gebildet.

Über die Benutzerschnittstelle 10U kann ein Nutzer der Küchenmaschine 1 mit der Küchenmaschine 1 interagieren und/oder ein bzw. eine oder mehrere Informationen/Parameter/Messwerte/Zustände/Ereignisse, beispielsweise betreffend den Betrieb der Küchenmaschine 1, das zuzubereitende Lebensmittel und/oder das zu verwendende oder ausgewählte Rezept, der Küchenmaschine 1 entnehmen und/oder hinzufügen/vorgeben.

Die Datenverarbeitungseinrichtung 10R ist vorzugsweise eine Einrichtung zur Auswertung, Speicherung und/oder Verarbeitung ein oder mehrerer Signale, Daten, Messwerte, Referenzwerte, Informationen, Parameter, Zustände, Ereignisse oder dergleichen. Insbesondere weist die Datenverarbeitungseinrichtung 10R eine Recheneinheit, wie einen Prozessor, auf.

Vorzugsweise weist die Basisstation 10, insbesondere die Datenverarbeitungseinrichtung 10R, einen (Daten-) Speicher (in Fig. 1 nicht dargestellt), beispielsweise in Form einer SSD, auf. Es ist jedoch auch möglich, dass zusätzlich oder alternativ das Gefäß 20 einen (Daten-)Speicher aufweist. Darüber hinaus sind auch Lösungen möglich, bei denen ein externes Gerät bzw. eine externe Einrichtung, wie eine (zentralen) Datenverarbeitungseinrichtung, beispielsweise ein Server, einen Datenspeicher für die Küchenmaschine 1 aufweist. Insbesondere können sowohl die Basisstation 10 und/oder das Gefäß 20 als auch ein externes Gerät bzw. eine externe Einrichtung jeweils einen Datenspeicher für die Küchenmaschine 1 aufweisen, beispielsweise zur Datensicherung und/oder um die auf dem Datenspeicher der Basisstation 10 gespeicherte Datenmenge zu reduzieren und/oder um nur bedarfsweise Daten (temporär) auf den Datenspeicher der Basisstation 10 bzw. des Gefäßes 20 zu laden.

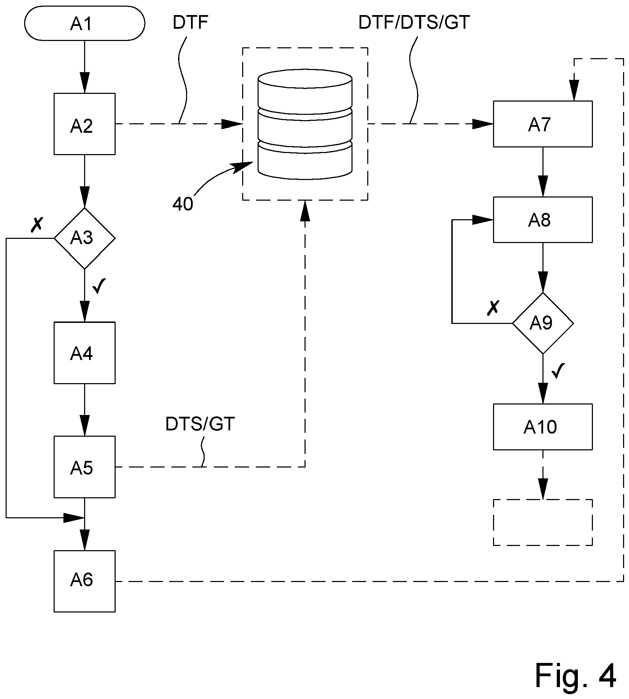

Im Folgenden wird allgemein der Begriff "Datenspeicher" für die elektronische Speicherung von Information/-Daten verwendet. Der Datenspeicher 40 oder ein Teil des Datenspeichers 40 kann in der Basisstation 10, dem Gefäß 20 und/oder einem externen Gerät bzw. einer externen Einrichtung, wie einer (zentralen) Datenverarbeitungseinrichtung, vorgesehen sein. Der Datenspeicher 40 ist lediglich in Fig. 4 schematisch dargestellt.

Die Steuereinrichtung 10S ist vorzugsweise dazu ausgebildet, den Elektromotor 10E bzw. den Rührer 20R und/oder das Heizsystem 20H insbesondere entsprechend den Vorgaben eines Rezeptes zu steuern, insbesondere zu aktivieren bzw. zu deaktivieren und/oder die Leistung des Elektromotors 10E und/oder des Heizsystems 20H anzupassen, vorzugsweise zumindest teilweise automatisch.

Durch die Kommunikationseinrichtung 10K kann die Küchenmaschine 1 mit einem oder mehreren (externen) Geräten, insbesondere einem Mobilgerät, wie einem Mobiltelefon, und/oder mit einer oder mehreren (externen) Einrichtungen, wie einer (zentralen) Datenverarbeitungseinrichtung, beispielsweise einem Server, zum Datenaustausch bzw. zur Signalübertragung datentechnisch gekoppelt werden.

Insbesondere ermöglicht die Kommunikationseinrichtung 10K eine drahtgebundene oder drahtlose Verbindung zwischen der Küchenmaschine 1 und einem oder mehreren (externen) Geräten bzw. einer oder mehreren Einrichtungen, um ein Signal und/oder eine Information, insbesondere betreffend den Betrieb der Küchenmaschine, die zuzubereitenden Lebensmittel und/oder das zu verwendende Rezept, zu übermitteln bzw. zwischen der Küchenmaschine 1 und dem bzw. den Geräten und/oder der bzw. den Einrichtungen auszutauschen, wobei der Datenaustausch bzw. die Signalübertragung indirekt oder direkt erfolgen kann.

Wie bereits erläutert, weist die Küchenmaschine 1, insbesondere die Basisstation 10, die Benutzerschnittstelle 10U auf. Es sind jedoch auch Lösungen möglich, bei denen ein externes Gerät, wie das Mobilgerät, die oder eine zusätzliche Benutzerschnittstelle 10U der Küchenmaschine 1 aufweist oder bildet.

Eine (zentrale) Datenverarbeitungseinrichtung, im Folgenden kurz Zentraleinrichtung, im Sinne der vorliegenden Erfindung ist vorzugsweise ein Rechner/Computer, ein Server oder ein Serververbund. Eine Zentraleinrichtung kann aber auch eine virtuelle Einheit von mehreren Rechnern/Computern oder durch sogenanntes Cloud-Computing realisiert werden.

Ein Signal im Sinne der vorliegenden Erfindung ist vorzugsweise ein Mittel zur Informationsübertragung, eine (modulierte) Welle, eine Bitsequenz, ein Paket im informationstechnischen Sinne oder dergleichen. Insbesondere sind einem Signal eine oder mehrere Informationen zugeordnet und/oder in dem Signal enthalten, die mittels des Signals übermittelbar ist bzw. sind.

Die Kommunikationseinrichtung 10K weist vorzugsweise einen Receiver zum Empfangen eines Signals, einen Transmitter zum Senden eines Signals und/oder eine Schnittstelle, insbesondere eine Funkschnittstelle, eine WPAN-Schnittstelle, eine Nahfeldkommunikationsschnittstelle, eine NFC-Schnittstelle, eine WLAN-Schnittstelle oder eine sonstige, besonders bevorzugt drahtlose, Schnittstelle auf.

Mittels der Messeinrichtung 10M können eine oder mehrere Messgrößen, wie eine Temperatur, insbesondere eine Heiztemperatur HT, ein Gewicht, eine elektrische Spannung, eine elektrische Stromstärke, ein elektrischer Widerstand, eine Drehzahl, ein Druck, eine Luftfeuchtigkeit und/oder eine Neigung der Küchenmaschine 1, insbesondere der Basisstation 10 und/oder des Gefäßes 20, besonders bevorzugt des Elektromotors 10E und/oder des Heizsystems 20H, (direkt oder indirekt) bestimmt bzw. gemessen werden.

Zu diesem Zweck weist die Messeinrichtung 10M einen oder mehrere Sensoren bzw. Messgeräte auf, wie ein Temperaturelement 10T, eine Waage, ein Spannungsmessgerät, ein Strommessgerät, ein Drehzahlmessgerät, einen Drucksensor, einen Feuchtigkeitssensor oder einen Neigungssensor.

Vorzugsweise weist die Küchenmaschine 1, insbesondere die Basisstation 10 bzw. die Messeinrichtung 10M, mindestens einen insbesondere elektrischen Drucksensor auf (nicht dargestellt), wobei der Drucksensor eine Waage der Küchenmaschine 1 bilden kann bzw. das Gewicht des Gefäßes 20 bzw. des Lebensmittels in dem Gefäß 20 mittels des Drucksensors bestimmbar ist. Der Drucksensor kann beispielsweise durch einen oder mehrere Dehnungsmessstreifen gebildet sein, vorzugsweise wobei jeweils ein Dehnungsmessstreifen in einen Fuß der Küchenmaschine 1 angeordnet ist.

Das Heizsystem 20H weist vorzugsweise eine elektrische Heizeinrichtung 20Q und/oder eine Heizplatte 20P auf, vorzugsweise wobei die Heizeinrichtung 20Q zur Wärmeerzeugung bzw. zum (gleichmäßigen) Erhitzen der Heizplatte 20P und/oder die Heizplatte 20P zur (gleichmäßigen) Wärmeabgabe insbesondere an den Zubereitungsraum ZR bzw. ein darin befindliches Lebensmittel ausgebildet ist.

Das Heizsystem 20H ist vorzugsweise flach bzw. platten/scheibenartig ausgebildet, insbesondere um das Heizsystem 20H in den Boden 20B des Gefäßes 20 integrieren zu können.

Das Heizsystem 20H, insbesondere die Heizeinrichtung 20Q und/oder die Heizplatte 20P, ist bzw. sind vorzugsweise ringförmig bzw. kreisscheibenförmig ausgebildet und/oder weist bzw. weisen eine insbesondere mittige Öffnung auf, um den Elektromotor 10E, die Welle 10W und/oder den Rührer 20R zumindest teilweise aufzunehmen. Mit anderen Worten erstreckt sich das Heizsystem 20H, insbesondere die Heizeinrichtung 20Q und/oder die Heizplatte 20P, ringförmig um den Elektromotor 10E, die Welle 10W und/oder den Rührer 20R.

Die Heizplatte 20P ist vorzugsweise als Wärmeübertrager ausgebildet bzw. dazu ausgebildet, die mittels der Heizeinrichtung 20Q erzeugte Wärme insbesondere dem Zubereitungsraum ZR zuzuführen und/oder an ein Lebensmittel in dem Gefäß 20 bzw. den Zubereitungsraum ZR zu übertragen. Zu diesem Zweck ist die Heizplatte 20P vorzugsweise ganz oder teilweise aus Metall, insbesondere Kupfer, Aluminium und/oder Edelstahl, hergestellt.

Vorzugsweise begrenzt die Heizplatte 20P den Zubereitungsraum ZR nach unten und/oder bildet die Heizplatte 20P den Boden 20B des Gefäßes 20 oder einen Teil davon. Insbesondere steht die Heizplatte 20P bei der Zubereitung des Lebensmittels (unmittelbar) mit dem Lebensmittel in Kontakt.

Die Heizplatte 20P ist vorzugsweise zwischen der Heizeinrichtung 20Q und dem Zubereitungsraum ZR angeordnet und/oder trennt die Heizeinrichtung 20Q von dem Zubereitungsraum ZR.

Die Heizplatte 20P kann ein- oder mehrschichtig ausgebildet sein. Vorzugsweise ist zumindest die dem Zubereitungsraum ZR zugewandte Schicht/Seite der Heizplatte 20P lebensmittelecht ausgebildet und/oder aus Edelstahl hergestellt.

Das Heizsystem 20H, insbesondere die Heizeinrichtung 20Q, weist vorzugsweise mindestens ein Heizelement und/oder eine Trägerschicht auf, vorzugsweise wobei das Heizelement auf oder in der Trägerschicht angeordnet und/oder durch die Trägerschicht elektrisch von der Heizplatte 20P isoliert ist. Insbesondere ist die Trägerschicht aus einem elektrisch isolierenden Material, beispielsweise faserverstärktem Kunststoff, hergestellt, um das Heizelement elektrisch zu isolieren.

Das Heizelement ist vorzugsweise als elektrischer (länglicher) Leiter, besonders bevorzugt als Thermistor, insbesondere als Kaltleiter bzw. PTC-Widerstand, ausgebildet. Es sind jedoch auch Lösungen möglich, bei denen das Heizelement als Heißleiter bzw. NTC-Widerstand ausgebildet ist.

Vorzugsweise wandelt das Heizelement elektrische Energie in Wärmeenergie um bzw. erhitzt sich das Heizelement, insbesondere auf eine Heiztemperatur, wenn es von einem elektrischen Strom durchflossen wird.

Um das Heizelement mit elektrischer Energie zu versorgen, weist das Heizsystem 20H, insbesondere die Heizeinrichtung 20Q, den elektrischen Anschluss 20X auf, vorzugsweise wobei der elektrische Anschluss 20X durch zwei elektrische Kontakte gebildet ist. Es sind jedoch auch Ausführungsformen möglich, bei denen das Heizsystem 20H, insbesondere die Heizeinrichtung 20Q, durch Induktion mit elektrischer Energie versorgt wird.

Die Heiztemperatur HT ist vorzugsweise die insbesondere mittlere/durchschnittliche bzw. über die gesamte Länge/Fläche des Heizelements gemittelte bzw. flächige Temperatur des Heizelements oder der Heizplatte 20P.

Wie bereits erläutert, weist die Küchenmaschine 1, insbesondere das Heizsystem 20H, vorzugsweise ein Temperaturelement 20T auf. Das Temperaturelement 20T ist vorzugsweise zum Ermitteln der Heiztemperatur HT ausgebildet bzw. derart angeordnet, dass es die Heiztemperatur HT messtechnisch erfasst.

Das Temperaturelement 20T ist vorzugsweise als Temperatursensor bzw. Thermometer, besonders bevorzugt als (lokal messendes) Widerstandsthermometer, insbesondere NTC-Sensor, ausgebildet.

Das Temperaturelement 20T ist vorzugsweise (unmittelbar) an der Heizplatte 20P bzw. lebensmittelnah angeordnet bzw. befestigt. Es ist jedoch auch möglich, dass das Temperaturelement 20T (unmittelbar) an dem Heizelement und/oder der Trägerschicht bzw. heizmittelnah angeordnet bzw. befestigt ist.

Es sind auch Ausführungsformen möglich, bei denen die Küchenmaschine 1 bzw. das Gefäß 20 ein erstes Temperaturelement und ein zweites Temperaturelement aufweist, wobei das erstes Temperaturelement und ein zweites Temperaturelement unterschiedlich weit zu dem Heizelement beabstandet sind. Insbesondere können das erste Temperaturelement (unmittelbar) an der Heizplatte 20P bzw. lebensmittelnah angeordnet bzw. befestigt und das zweite Temperaturelement (unmittelbar) an dem Heizelement und/oder der Trägerschicht bzw. heizmittelnah angeordnet bzw. befestigt sein.

Das Temperaturelement 20T ist vorzugsweise mit dem zweiten elektrischen Anschluss 20Y elektrisch verbunden, vorzugsweise wobei der zweite elektrische Anschluss 20Y auf einer dem Zubereitungsraum ZR abgewandten Seite bzw. Unterseite des Heizsystems 20H bzw. der Heizeinrichtung 20Q angeordnet ist.

Vorzugsweise ist das Temperaturelement 20T über dem elektrischen Anschluss 20Y des Gefäßes 20 und dem elektrischen Anschluss 10Y der Basisstation 10 elektrisch mit der Messeinrichtung 10M, der Steuereinrichtung 10S, der Datenverarbeitungseinrichtung 10R, der Benutzerschnittstelle 10U, der Kommunikationseinrichtung 10K und/oder dem Netzteil 10N verbunden oder verbindbar.

Im Folgenden wird das vorschlagsgemäße Verfahren zum Betreiben bzw. Regeln der Küchenmaschine 1 bzw. zu Kalibrieren des elektrischen Heizsystems 20H beschrieben.

Das Verfahren ist vorzugsweise mehrstufig bzw. mehrschrittig ausgebildet. Insbesondere weist das Verfahren mehrere Verfahrensschritte auf, wobei die einzelnen Verfahrensschritte grundsätzlich unabhängig voneinander und in beliebiger Reihenfolge durchgeführt werden können, sofern im Folgenden nicht anders erläutert.

Das vorschlagsgemäße Verfahren wird vorzugsweise durch die bzw. in der Küchenmaschine 1, insbesondere mittels des Heizsystems 20H, der Steuereinrichtung 10S, der Messeinrichtung 10M, des Temperaturelements 20T, der Datenverarbeitungseinrichtung 10R, des Elektromotors 10E, dem Datenspeicher 40 und/oder der Benutzerschnittstelle 10U, durchgeführt.

Die Küchenmaschine 1, insbesondere die Datenverarbeitungseinrichtung 10R, ist vorzugsweise zur Ausführung des hierin beschriebenen Verfahrens bzw. einzelner Verfahrensschritte ausgebildet. Insbesondere sind die Befehle bzw. ist der Algorithmus zur Ausführung des vorschlagsgemäßen Verfahrens bzw. einzelner Verfahrensschritte des vorschlagsgemäßen Verfahrens elektronisch in dem Datenspeicher 40 der Küchenmaschine 1, insbesondere der Datenverarbeitungseinrichtung 10R, gespeichert. Es ist jedoch auch möglich, dass ein oder mehrere Verfahrensschritte mittels einer (externen) Einrichtung bzw. eines (externen) Gerätes, wie der Zentraleinrichtung und/oder dem Mobilgerät, durchgeführt werden und/oder einzelne oder mehrere Befehle zur Ausführung des Verfahrens bzw. einzelner Verfahrensschritte dort gespeichert sind.

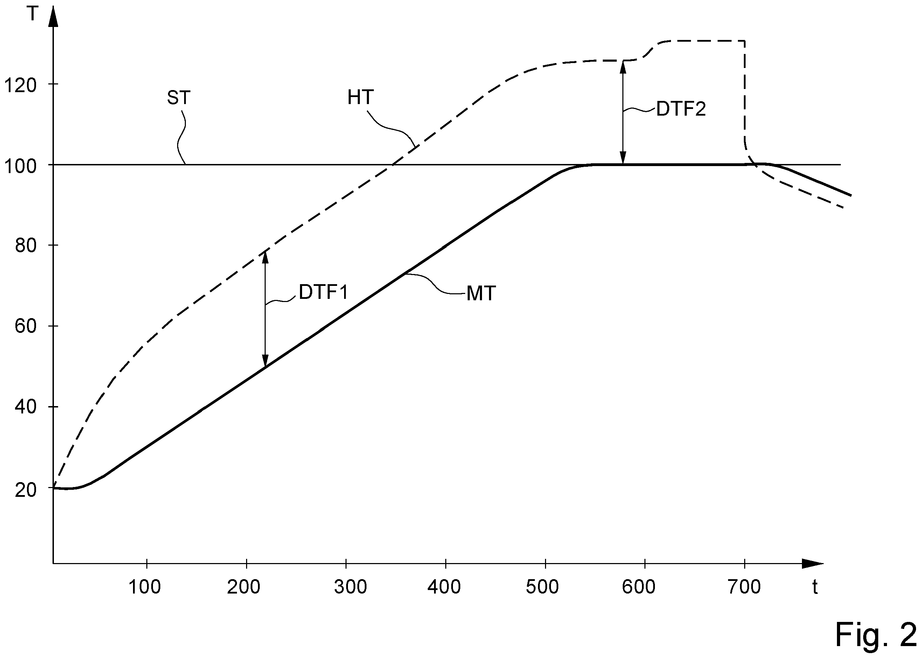

Fig. 2 zeigt ein schematisches Diagramm mit dem zeitlichen Verlauf der mittels des Temperaturelements 20T gemessenen Heiztemperatur HT und einer mittels eines Mess- bzw. Kalibriergeräts 30 gemessenen Messtemperatur MT.

Wie bereits erläutert, ist das Temperaturelement 20T vorzugsweise in das Heizsystem 20H, insbesondere die Heizeinrichtung 20Q, integriert. Die mittels des Temperaturelements 20T gemessene Heiztemperatur HT ist folglich höher als die (tatsächliche) Temperatur des Mediums bzw. Lebensmittels im Gefäß 20.

Die tatsächliche Temperatur des Mediums bzw. des Lebensmittels kann mittels eines Mess- bzw. Kalibriergeräts 30, im Folgenden stets Kalibriergerät 30 genannt, gemessen werden.

Wie in Fig. 1 dargestellt, kann das Kalibriergerät 30 zu diesem Zweck in das Gefäß 20 eingeführt werden, und zwar vorzugsweise derart, dass der Temperatursensor 30S des Kalibriergeräts 30 unmittelbar neben bzw. oberhalb des Temperaturelements 20T platziert ist.

Während des Heizvorgangs mittels des Heizsystems 20H erhitzt sich die Heizplatte 20P und anschließend das Medium bzw. das Lebensmittel im Gefäß 20. Dies führt dazu, dass die Heiztemperatur HT der Messtemperatur MT zeitlich vorauseilt bzw. schneller ansteigt als die Messtemperatur MT.

Aufgrund des größeren Abstandes zwischen dem Temperatursensor 30S und der Heizeinrichtung 20Q im Vergleich zu dem Abstand zwischen dem Temperaturelement 20T und der Heizeinrichtung 20Q bzw. aufgrund der Wärmeverluste ist die Messtemperatur MT zumindest während des Heizvorgangs niedriger als die Heiztemperatur HT, und zwar sowohl beim Aufheizvorgang auf die Siedetemperatur ST als auch nach Erreichen der Siedetemperatur ST.

Die Differenz DTF zwischen der Messtemperatur MT und der Heiztemperatur HT, ist darüber hinaus aufgrund von Fertigungstoleranzen insbesondere der elektrischen und wärmeführenden Komponenten und aufgrund von Abweichungen der thermischen Ankopplung des Temperaturelements 20T an die Heizplatte 20P geräte- bzw. gefäßspezifisch.

Fig. 2 veranschaulicht, dass bei dem Aufheizvorgang auf die Siedetemperatur ST die Heiztemperatur HT zunächst schneller ansteigt als die Messtemperatur MT. Nach einer gewissen Zeit, im dargestellten Beispiel nach etwa 100 Sekunden, sind die Verläufe der Messtemperatur MT und der Heiztemperatur HT zumindest im Wesentlichen parallel.

Sowohl die Heiztemperatur HT als auch die Messtemperatur MT steigen zumindest im Wesentlichen linear an, bis die Messtemperatur MT die Siedetemperatur ST des Mediums bzw. des Lebensmittels erreicht.

Im dargestellten Beispiel beträgt die Siedetemperatur ST 100 °C. Die Siedetemperatur ST kann jedoch aufgrund des Umgebungsdrucks auch höher oder niedriger als 100 °C sein, wie im Folgenden noch näher erläutert wird.

Nach Erreichen der Siedetemperatur ST, im dargestellten Beispiel bei etwa 500 Sekunden, sind die Messtemperatur MT und die Heiztemperatur HT zumindest im Wesentlichen konstant.

Die Differenz DTF1 zwischen der Heiztemperatur HT und der Messtemperatur MT kann während des Aufheizvorgangs bzw. bis Erreichen der Siedetemperatur ST größer sein als die Differenz DTF2 zwischen der Heiztemperatur HT und der Messtemperatur MT nach Erreichen der Siedetemperatur ST.

Im Folgenden wird die Differenz DTF zwischen der Heiztemperatur HT und der tatsächlichen Temperatur des Lebensmittels bzw. der Messtemperatur MT als Kalibrierwert DTF bezeichnet.

Mittels des Kalibrierwerts DTF und der mittels des Temperaturelements 20T gemessenen Heiztemperatur HT kann die Messtemperatur MT auch ohne das Kalibriergerät 30 berechnet werden, insbesondere gemäß der folgenden Gleichung:

$$MT = HT - DTF,$$

mit HT als Heiztemperatur in [°C], MT als Messtemperatur in [°C] und DTF als Kalibrierwert in [°C].

Der Kalibrierwert DTF kann ein mittlerer Kalibrierwert DTF sein bzw. durch die Summe mehrerer Messwerte geteilt durch die Anzahl der Messwerte berechnet werden.

Insbesondere können ein oder mehrere Messwerte während des Aufheizvorgangs bis zum Erreichen der Siedetemperatur ST und/oder ein oder mehrere Messwerte nach Erreichen der Siedetemperatur ST gemessen werden, um eine mittlere Differenz DTF zwischen der Messtemperatur MT und der Heiztemperatur HT bzw. einen gemittelten Kalibrierwert DTF zu bilden.

Es ist jedoch auch möglich, dass der Kalibrierwert DTF als temperaturabhängiger Kalibrierwert DTF gespeichert bzw. verwendet wird. Insbesondere kann für einen ersten Temperaturbereich, beispielsweise zwischen 40 °C und 90 °C, ein erster (gemittelter) Kalibrierwert DTF1 und für einen zweiten Temperaturbereich, beispielsweise zwischen 90 °C und 100 °C, ein zweiter Kalibrierwert DTF2 berechnet und elektronisch gespeichert werden.

Bei dem in Fig. 2 dargestellten Aufheizvorgang ist der Rührer 20R aktiviert. Der Rührer 20R wird nach etwa 600 Sekunden abgeschaltet, weshalb die Heiztemperatur HT aufgrund des schlechteren Wärmeübergangs von der Heizplatte 20P auf das Medium bzw. das Lebensmittel ansteigt. Nach etwa 100 Sekunden wird das Heizsystem 20H bzw. die Heizeinrichtung 20Q deaktiviert, sodass zunächst die Heiztemperatur HT und anschließend die Messtemperatur MT aufgrund der Abkühlung sinken.

Durch den Kalibriervorgang bzw. den ermittelten Kalibrierwert DTF ist es möglich, insbesondere fertigungsbedingte Abweichungen zwischen der Heiztemperatur HT und der tatsächlichen Temperatur des Mediums bzw. des Lebensmittels auszugleichen. Die um den Kalibrierwert DTF korrigierte Heiztemperatur HT kann anschließend bei der Zubereitung des Lebensmittels verwendet werden und einem Nutzer über die Benutzerschnittstelle 10U angezeigt werden. Auf diese Weise wird eine besonders genaue Temperaturmessung und -regelung ermöglicht.

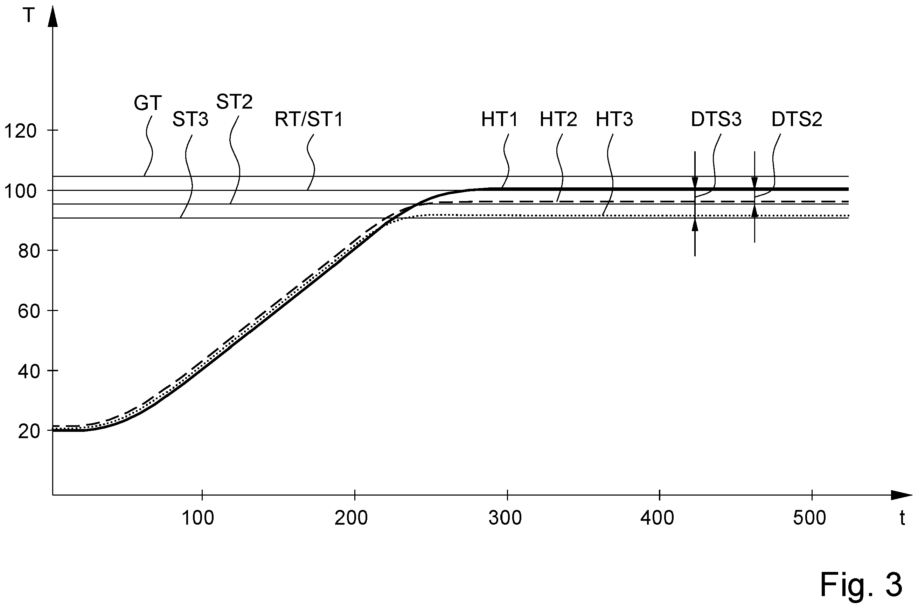

Fig. 3 zeigt einen schematischen zeitlichen Verlauf der Heiztemperatur HT an Standorten mit einer unterschiedlichen Höhe über dem Meeresspiegel.

Die Höhe über dem Meeresspiegel im Sinne der vorliegenden Erfindung ist der lotrechte Abstand eines bestimmten Punktes in Bezug auf ein vordefiniertes Nullniveau bzw. einen festgelegten (mittleren) Meeresspiegel. Als Bezug bzw. festgelegter mittlerer Meeresspiegel wird in Deutschland das Normalhöhennull, kurz NHN, verwendet.

In Fig. 3 stellt die durchgezogene Linie den zeitlichen Verlauf für eine erste Heiztemperatur HT1 auf 0 Meter über NHN dar. Die gestrichelte Linie ist der zeitliche Verlauf einer zweiten Heiztemperatur HT2 auf 200 Meter über NHN. Die gepunktete Linie ist der zeitliche Verlauf einer dritten Heiztemperatur HT3 auf 2000 Meter über NHN.

In dem Diagramm ist 100 °C als Referenztemperatur RT eingezeichnet, die der Siedetemperatur ST auf 0 Meter über NHN entspricht.

Das Diagramm veranschaulicht, dass in Abhängigkeit von der Höhe über dem Meeresspiegel unterschiedliche Siedetemperaturen ST vorliegen bzw. die Heiztemperaturen HT unterschiedliche Maxima erreichen.

Die Siedetemperatur ST1 bzw. die maximale Heiztemperatur HT1 beträgt auf einer Höhe von 0 Meter über NHN zumindest im Wesentlichen 100 °C. Die Siedetemperatur ST2 bzw. die maximale Heiztemperatur HT2 auf einer Höhe von 200 Metern über NHN beträgt zumindest im Wesentlichen 99 °C. Die Siedetemperatur ST3 bzw. die maximale Heiztemperatur HT3 auf einer Höhe von 2000 Metern über NHN beträgt zumindest im Wesentlichen 93 °C.

Wie bereits erläutert, kann die Heiztemperatur HT darüber hinaus gerätespezifisch sein bzw. bei einer ersten Küchenmaschine 1 bzw. bei einem ersten Gefäß 20 unterschiedlich zu der Heiztemperatur HT bei einer zweiten Küchenmaschine 1 bzw. einem zweiten Gefäß 20 sein.

Die Abweichung der Siedetemperatur ST bzw. der maximalen Heiztemperatur HT zu einer Referenztemperatur RT wird bei dem vorschlagsgemäßen Verfahren in einem Korrekturvorgang automatisch gemessen und als Korrekturwert DTS elektronisch in dem Datenspeicher 40 bzw. in der Küchenmaschine 1, insbesondere der Datenverarbeitungseinrichtung 10R, gespeichert werden.

Der Korrekturwert DTS kann folglich mittels der vordefinierten Referenztemperatur RT und der ermittelten Siedetemperatur ST berechnet werden, insbesondere gemäß der folgenden Gleichung:

$$DTS = RT - ST,$$

mit DTS als Korrekturwert in [°C], RT als Referenztemperatur in [°C] und ST als Siedetemperatur in [°C].

In dem dargestellten Diagramm beträgt der Korrekturwert DTS2 für eine Küchenmaschine 1 auf einer Höhe von 200 Metern über NHN 1 °C und der Korrekturwert DTS3 für eine Küchenmaschine 1 auf einer Höhe von 2000 Metern über NHN 7 °C.

Der Korrekturwert DTS kann dann beim Betrieb der Küchenmaschine 1 bzw. bei der Zubereitung des Lebensmittels dazu verwendet werden, das Lebensmittel auf die tatsächliche Siedetemperatur ST zu erhitzen, wie im Folgenden anhand von Fig. 4 noch näher erläutert wird.

Bei dem vorschlagsgemäßen Verfahren ist darüber hinaus vorgesehen, einen vordefinierten Temperaturgrenzwert GT für die Heiztemperatur HT zu verwenden.

Der Temperaturgrenzwert GT ist ein vordefinierter, insbesondere höhenspezifischer, (Maximal-)Wert für die Heiztemperatur HT, insbesondere oberhalb der (vorliegenden) Siedetemperatur ST. Beispielsweise kann der Temperaturgrenzwert bei 0 Meter über NHN 106 °C betragen.

Bei Erreichen oder Überschreiten des vordefinierten Temperaturgrenzwerts GT wird vorzugsweise automatisch die Heizleistung des Heizsystems 20H reduziert. Auf diese Weise wird verhindert, dass im Gefäß 20 ein (relevanter) Überdruck entstehen.

Vorzugsweise wird der Temperaturgrenzwert GT beim Korrekturvorgang verwendet, insbesondere als zusätzliche Sicherheit, falls der Siedepunkt nicht detektiert und deshalb der Heizvorgang trotz Erreichen der Siedetemperatur ST mit gleichbleibender Heizleistung fortgeführt werden sollte.

Gemäß einer bevorzugten Verfahrensvariante wird der Temperaturgrenzwert GT beim Betrieb der Küchenmaschine 1 automatisch in Abhängigkeit vom ermittelten Korrekturwert DTS angepasst. Insbesondere wird der Temperaturgrenzwert GT um den Korrekturwert DTS korrigiert.

Mittels des Korrekturwertes DTS kann folglich ein (neuer) Temperaturgrenzwert GT2 berechnet werden, insbesondere gemäß der folgenden Gleichung:

$$GT2 = GT1 - DTS,$$

mit GT2 als neuer Temperaturgrenzwert in [°C], GT1 als alter/vordefinierter Temperaturgrenzwert in [°C] und DTS als Korrekturwert in [°C].

Auf diese Weise werden auch an Standorten mit einem niedrigen Umgebungsdruck kritische Druckzustände im Gefäß 20 verhindert.

Fig. 4 zeigt ein schematisches Ablaufdiagramm gemäß einer bevorzugten Verfahrensvariante mit mehreren Verfahrensschritten A1 bis A10.

Das Verfahren wird vorzugsweise durch Starten bzw. Einschalten der Küchenmaschine 1 insbesondere mittels der Eingabeeinrichtung 10B initiiert, vorzugsweise in einem ersten Verfahrensschritt A1.

Vorzugsweise ergeht beim erstmaligen Starten bzw. Einschalten der Küchenmaschine 1 über die Benutzerschnittstelle 10U ein Hinweis, dass ein Kalibriervorgang und/oder ein Korrekturvorgang durchgeführt werden sollte. Insbesondere wird der Nutzer beim erstmaligen Starten bzw. Einschalten der Küchenmaschine 1 darüber informiert, dass zumindest der Korrekturvorgang regelmäßig bzw. bei einem Standortwechsel erneut durchgeführt werden sollte.

Optional wird anschließend bzw. in einem weiteren/zweiten Verfahrensschritt A2 der Kalibriervorgang durchgeführt, insbesondere vor dem Korrekturvorgang, beispielsweise bei erstmaliger Inbetriebnahme der Küchenmaschine 1.

Bei dem Kalibriervorgang wird die (mittlere) Abweichung der mittels des Temperaturelements 20T ermittelten Heiztemperatur HT zu der mittels des Kalibriergeräts 30 ermittelten Messtemperatur MT bestimmt und vorzugsweise automatisch in dem Datenspeicher 40 der Küchenmaschine 1, insbesondere der Datenverarbeitungseinrichtung 10R, oder der Zentraleinrichtung gespeichert, wie in Fig. 4 durch den Pfeil veranschaulicht.

Für den Kalibriervorgang wird vorzugsweise herstellerseitig bzw. am Ende der Produktionslinie oder bei einem Nutzer das Kalibriergerät 30 bzw. der Temperatursensor 30S des Kalibriergeräts 30 in die Küchenmaschine 1, insbesondere das Gefäß 20, eingeführt, vorzugsweise derart, dass der Temperatursensor 30S unmittelbar oberhalb bzw. benachbart zum Temperaturelement 20T angeordnet ist, wie in Fig. 1 dargestellt.

Anschließend wird das Heizsystem 20H, insbesondere die Heizeinrichtung 20Q, eingeschaltet und ein oder mehrere Werte für die Messtemperatur MT mittels des Kalibriergeräts 30 und ein oder mehrere Werte für die Heiztemperatur HAT mittels des Temperaturelements 20T bzw. der Messeinrichtung 10M erfasst, verarbeitet und/oder gespeichert.

Insbesondere wird die Differenz zwischen der Heiztemperatur HT und der Messtemperatur MT zu unterschiedlichen Zeitpunkten während des Heizvorgangs gebildet. Optional kann anschließend ein Mittelwert der Differenzen berechnet werden.

Die (gemittelte) Differenz zwischen der Heiztemperatur HT und der Messtemperatur MT wird vorzugsweise als Kalibrierwert DTF elektronisch in dem Datenspeicher 40 gespeichert, wie bereits erläutert.

In einem weiteren/dritten Verfahrensschritt A3 wird vorzugsweise automatisch insbesondere mittels der Datenverarbeitungseinrichtung 10R ein vordefinierter Zustand bzw. die Änderung eines vordefinierten Zustandes und/oder ein vordefiniertes Ereignis bzw. der Eintritt eines vordefinierten Ereignisses überwacht, um festzustellen, ob - zusätzlich zum optionalen Kalibriervorgang - erstmalig ein Korrekturvorgang bzw. ein erneuter Korrekturvorgang durchgeführt werden muss. Insbesondere wird überwacht, ob sich der vordefinierte Zustand verändert und/oder das vordefinierte Ereignis eingetreten ist.

Ein (erster) Zustand kann ein vordefiniertes Zeitintervall sein. Beispielsweise kann überprüft werden, ob nach Durchführung des letzten Korrekturvorgangs und/oder nach der letzten Benutzung der Küchenmaschine 1 eine vordefinierte Zeit vergangen ist.

Insbesondere kann nach Ablauf eines vordefinierten Zeitintervalls, beispielsweise sechs oder zwölf Monate, automatisch über die Benutzerschnittstelle 10U die Aufforderung zur Durchführung des Korrekturvorgangs ergehen. Auf diese Weise können etwaige Alterungseffekte der elektronischen und/oder wärmeführenden Komponenten regelmäßig durch die Durchführung eines neuen Korrekturvorgangs kompensiert werden.

Ein weiterer/zweiter Zustand kann eine bestehende Datenverbindung der Küchenmaschine 1 sein. Zusätzlich oder alternativ kann ein überwachtes Ereignis eine neue Datenverbindung der Küchenmaschine 1 sein.

Insbesondere kann nach Aufbau einer anderen oder neuen Datenverbindung, wie die Verbindung mit einem anderen oder neuen WLAN, und/oder die Zuweisung einer anderen oder neuen IP-Adresse automatisch die Mitteilung mit der Aufforderung zur Durchführung des Korrekturvorgangs ergehen.

Da der Aufbau einer neuen Datenverbindung häufig aufgrund eines Standortwechsels durchgeführt wird, ist die Überwachung der Datenverbindung eine besonders einfache Möglichkeit, einen Standortwechsel ohne zusätzliche Sensorik zu erfassen.

Darüber hinaus kann ein (weiteres) überwachtes Ereignis durch den Hersteller der Küchenmaschine 1 hervorgerufen werden.

Beispielsweise kann eine Softwareaktualisierung bzw. ein Over-the-Air-Update ein (weiteres) überwachtes Ereignis sein.

Nach der Durchführung der Softwareaktualisierung bzw. des Over-the-Air-Updates kann dann eine Aufforderung zur (erneuten) Durchführung des Korrekturvorgangs ergehen.

Ein weiterer/dritter überwachter Zustand kann die Verwendung mit einem bereits identifizierten Gefäß 20 sein. Zusätzlich oder alternativ kann ein weiteres überwachtes Ereignis die erstmalige Verwendung mit einem neuen bzw. noch nicht identifizierten Gefäß 20 sein.

Insbesondere kann nach erstmaliger Identifikation eines Gefäßes 20 durch die Basisstation 10 die Mitteilung mit der Aufforderung zur Durchführung des Korrekturvorgangs erfolgen. Auf diese Weise wird sichergestellt, dass für jedes Gefäß 20 ein Korrekturvorgang durchgeführt wird, um einen gefäßspezifischen Korrekturwert zu bestimmen.

Wie bereits erläutert, weist vorzugsweise das Gefäß 20 eine eindeutige Kennung bzw. einen eindeutigen Identifikator auf, beispielsweise in Form einer Seriennummer, vorzugsweise wobei die Kennung bzw. der Identifikator als Transponder, insbesondere RFID-Chip, und/oder als Barcode am Gefäß 20 ausgebildet ist.

Die Küchenmaschine 1, insbesondere die Basisstation 10, ist vorzugsweise dazu ausgebildet, das Gefäß 20 zu detektieren bzw. zu identifizieren. Insbesondere weist die Basisstation 10 ein Lesegerät zum Auslesen der Kennung bzw. des Identifikators auf.

Ein weiteres überwachtes Ereignis kann die Auswahl eines Rezepts und/oder Lebensmittels anhand einer Benutzereingabe über die Benutzerschnittstelle 10U sein. Insbesondere kann in Abhängigkeit vom ausgewählten Rezept und/oder Lebensmittel der Korrekturvorgang automatisch bei der Zubereitung des Lebensmittels durchgeführt werden.

Beispielsweise wird der Korrekturvorgang nur bei vordefinierten Rezepten und/oder Lebensmitteln durchgeführt, vorzugsweise dann, wenn das ausgewählte bzw. mit dem ausgewählten Rezept zuzubereitende Lebensmittel einen vordefinierten Massenanteil, insbesondere von mindestens 50 %, von Wasser aufweist.

In diesem Fall ist bevorzugt, dass der Korrekturvorgang automatisch bei der Zubereitung des Lebensmittels durchgeführt wird, also insbesondere beim Erhitzen des Lebensmittels auf die Siedetemperatur ST automatisch die Abweichung der Siedetemperatur ST von der Referenztemperatur RT bestimmt und als (neuer) Korrekturwert DTS elektronisch gespeichert wird.

Vorzugsweise ist ein weiterer überwachter Zustand die Änderung des Korrekturwerts DTS. Insbesondere wird überwacht, ob der während der Zubereitung bestimmte Korrekturwert DTS von dem zuletzt verwendeten bzw. vorherigen Korrekturwert DTS abweicht bzw. die Differenz der während der Zubereitung bestimmten Abweichung von dem zuletzt verwendeten bzw. vorherigen Korrekturwert DTS einen vordefinierten Grenzwert erreicht oder überschreitet.

Für den Fall, dass ein oder mehrere Kriterien erfüllt sind, also das vordefinierte Zeitintervall abgelaufen, eine neue Datenverbindung aufgebaut, eine Softwareaktualisierung durchgeführt, ein neues bzw. noch nicht identifiziertes Gefäß 20 erkannt wurde und/oder die Differenz der während der Zubereitung bestimmten Abweichung von dem zuletzt verwendeten bzw. vorherigen Korrekturwert DTS einen vordefinierten Grenzwert erreicht oder überschreitet, ergeht vorzugsweise automatisch in einem weiteren/vierten Verfahrensschritt A4 die Mitteilung mit der Aufforderung zur Durchführung des Korrekturvorgangs.

Die Mitteilung bzw. die Aufforderung zur Durchführung des Korrekturvorgangs kann optisch, beispielsweise mittels grafischer Zeichen, Zahlzeichen und/oder Wortzeichen, haptisch und/oder akustisch über die Benutzerschnittstelle 10U erfolgen.

Vorzugsweise enthält die Aufforderung zur Durchführung des Korrekturvorgangs einen oder mehrere Hinweise bzw. eine Anleitung, wie der Korrekturvorgang durchzuführen ist.

Es versteht sich, dass der Nutzer auch unabhängig von einer Aufforderung den Korrekturvorgang zu einem beliebigen Zeitpunkt durchführen kann, insbesondere durch eine entsprechende Eingabe über die Benutzerschnittstelle 10U.

Für den Korrekturvorgang ist vorzugsweise eine (vordefinierte) Menge eines flüssigen Mediums bzw. Lebensmittels, wie Wasser, beispielsweise weniger als 1,0 Liter, besonders bevorzugt zumindest im Wesentlichen 0,5 Liter oder weniger, in das Gefäß 20 zu füllen. Die Füllmenge kann insbesondere mittels der integrierten Messeinrichtung 10M ermittelt und über die Benutzerschnittstelle 10U, insbesondere die Anzeigeneinrichtung 10D, angezeigt werden.

Die genaue Menge des Mediums bzw. Lebensmittels ist jedoch für den Korrekturvorgang nicht von besonderer Bedeutung, da diese nur die Dauer bestimmt, bis die Siedetemperatur ST erreicht wird. Es ist deshalb aus Effizienzgründen vorgesehen, keine große Füllmenge für den Korrekturvorgang vorzugeben.

Nach Befüllung des Gefäßes 20 startet - in einem weiteren/fünften Verfahrensschritt A5 - der Heizvorgang automatisch oder nach einer entsprechenden Eingabe des Nutzers über die Benutzerschnittstelle 10U.

Für den Heizvorgang wird die Heizeinrichtung 10Q für einen vordefinierten Zeitraum aktiviert, vorzugsweise wobei während des Heizvorgangs die Heiztemperatur HT mittels des Temperaturelements 20T gemessen und insbesondere mittels der Datenverarbeitungseinrichtung 10R ausgewertet wird.

Besonders bevorzugt wird die Steigung bzw. der Gradient der Heiztemperatur HT berechnet, um das Erreichen der Siedetemperatur ST zu detektieren. Insbesondere wird während des Korrekturvorgangs der Temperaturgradient, insbesondere die Änderung des Temperaturgradienten, mit einem vordefinierten, insbesondere elektronisch gespeicherten Grenzwert verglichen, um das Erreichen der vorliegenden Siedetemperatur ST zu identifizieren.

Unterschreitet der Gradient der Heiztemperatur HT den vordefinierten Grenzwert, beispielsweise in Höhe von 1 °C pro Sekunde, ist die vorliegende Siedetemperatur ST erreicht. Mit anderen Worten erkennt die Küchenmaschine 1 automatisch anhand der anfänglichen höheren Temperatursteigung und anhand der beim Sieden entstehenden Abflachung des zeitlichen Verlaufs der Heiztemperatur HT den Siedepunkt des Mediums bzw. des Lebensmittels.

Es sind jedoch grundsätzlich auch andere Lösungen möglich. Beispielsweise können die durch das bzw. beim Erhitzen des Lebensmittels entstehenden Schwingungen bzw. Schwingungsänderungen, insbesondere ein Siedegeräusch, mittels der Messeinrichtung 10M der Küchenmaschine 1 gemessen werden, um den Siedepunkt zu bestimmen.

Vorzugsweise wird anschließend die Abweichung zwischen der ermittelten Siedetemperatur ST und einer vorzugsweise elektronisch gespeicherten Referenztemperatur RT, beispielsweise 100 °C berechnet und elektronisch als Korrekturwert DTS gespeichert, insbesondere in dem Datenspeicher 40.

Wie bereits erläutert, wird vorzugsweise der vordefinierte Temperaturgrenzwert GT beim Korrekturvorgang verwendet, und zwar derart, dass bei Erreichen oder Überschreiten des vordefinierten Temperaturgrenzwerts GT automatisch die Heizleistung des Heizsystems 20H reduziert wird.

Gemäß einer bevorzugten Verfahrensvariante wird der vordefinierte Temperaturgrenzwert GT durch den Korrekturvorgang angepasst oder ein neuer Temperaturgrenzwert GT berechnet.

Insbesondere wird der vordefinierte Temperaturgrenzwert GT um den Korrekturwert DTS korrigiert, um einen angepassten bzw. standortspezifischen Temperaturgrenzwert GT festzulegen, vorzugsweise wobei der angepasste Temperaturgrenzwert GT in dem Datenspeicher 40 elektronisch gespeichert wird, wie in Fig. 4 dargestellt.

Anschließend bzw. in einem weiteren/sechsten Verfahrensschritt A6 wird der Korrekturvorgang beendet, vorzugsweise wobei über die Benutzerschnittstelle 10U eine entsprechende Mitteilung ergeht.

Nach Abschluss des optionalen Korrekturvorgangs und des Kalibriervorgangs ist die Küchenmaschine 1 einsatzbereit. Insbesondere kann die Zubereitung des Lebensmittels in der Küchenmaschine 1 erfolgen.

Für den Fall, dass bei der Zubereitung des Lebensmittels ein Heizvorgang durchgeführt bzw. das Lebensmittel erhitzt wird, werden innerhalb eines weiteren/siebten Verfahrensschritts A7 der im Rahmen des Kalibriervorgangs ermittelte Kalibrierwert DTF, der im Rahmen des Korrekturvorgangs ermittelte Korrekturwert DTS und/oder der ggf. angepasste Temperaturgrenzwert GT automatisch von dem Datenspeicher 40 abgerufen, insbesondere mittels der Datenverarbeitungseinrichtung 10R und/oder der Kommunikationseinrichtung 10K.

Es ist jedoch bevorzugt, dass der Korrekturwert DTS nur bei Lebensmitteln verwendet wird, die zumindest im Wesentlichen wasserhaltig sind bzw. einen Massenanteil von Wasser mit mehr als 80 % oder 90 % aufweisen. Vorzugsweise wird automatisch anhand des ausgewählten Rezeptes bzw. der zuzubereitenden Lebensmittel entschieden, ob für die Zubereitung des Lebensmittels der Korrekturwert DTS zu verwenden ist.

Anschließend bzw. in einem weiteren/achten Verfahrensschritt A8 wird der Heizvorgang durchgeführt bzw. das Lebensmittel in dem Gefäß 20 erhitzt. Dabei ist vorgesehen, dass der Kalibrierwert DTF, der Korrekturwert DTS und/oder der (angepasste) Temperaturgrenzwert GT berücksichtigt werden.

Insbesondere wird zum Erhitzen des Lebensmittels auf die Siedetemperatur ST bzw. bei der Temperaturregelung die um den Korrekturwert DTS korrigierte Referenztemperatur RT als Zieltemperatur (Führungsgröße) verwendet.

Beispielsweise wird an einem Standort der Küchenmaschine 1 auf einer Höhe von 2000 Meter über NHN die Referenztemperatur RT in Höhe von 100 °C um den Korrekturwert DTS in Höhe von 7 °C korrigiert, um als Zieltemperatur 93 °C vorzugeben.

Darüber hinaus wird die Heiztemperatur HT um den Kalibrierwert DTF korrigiert, um die tatsächliche Temperatur des Mediums bzw. des Lebensmittels bei der Temperaturregelung zu verwenden und/oder über die Benutzerschnittstelle 10U einem Nutzer mitzuteilen.

Vorzugsweise wird insbesondere kontinuierlich während der Zubereitung bzw. während des Erhitzens des Lebensmittels überprüft, ob die Siedetemperatur ST oder der Temperaturgrenzwert GT erreicht wird, insbesondere in einem weiteren/neunten Verfahrensschritt A9.

Für den Fall, dass die Siedetemperatur ST noch nicht erreicht wird, wird der Heizvorgang fortgesetzt.

Für den Fall, dass die Siedetemperatur ST bzw. die um den Korrekturwert DTS korrigierte Referenztemperatur RT oder der (angepasste) Temperaturgrenzwert GT erreicht wird, wird - in einem weiteren/zehnten Verfahrensschritt A10 - vorzugsweise automatisch die Heizleistung des Heizsystems 20H reduziert, insbesondere um die vorliegende Siedetemperatur ST bzw. die um den Korrekturwert DTS korrigierte Referenztemperatur RT zu halten. Auf diese Weise wird verhindert, dass zu viel Energie in das Medium bzw. das Lebensmittel eingetragen wird, wie bereits erläutert.

Nach Abschluss des Heizvorgangs werden optional ein oder mehrere weitere Zubereitungsschritte durchgeführt, wie schematisch angedeutet.

Wie bereits erläutert, kann der Korrekturvorgang auch in die Zubereitung des Lebensmittels integriert werden. In diesem Fall läuft die Bestimmung der Abweichung der Siedetemperatur ST von der Referenztemperatur RT vorzugsweise im Hintergrund ab, sodass besonders bevorzugt keine Mitteilung mit einer Aufforderung zur Durchführung des Korrekturvorgangs ergeht.

Gemäß dieser Verfahrensvariante wird in Abhängigkeit vom über die Benutzerschnittstelle 10U ausgewählten Rezept und/oder Lebensmittel automatisch die Abweichung der Siedetemperatur ST von der Referenztemperatur RT beim Erhitzen des Lebensmittels auf die Siedetemperatur ST bestimmt und als Korrekturwert DTS (temporär) elektronisch gespeichert.

Insbesondere kann bei der Durchführung desselben Rezepts und/oder der Zubereitung desselben Lebensmittels stets die Abweichung der Siedetemperatur ST von der Referenztemperatur RT beim Erhitzen des Lebensmittels auf die Siedetemperatur ST bestimmt und als Mittelwert bzw. gemittelter Korrekturwert DTS elektronisch gespeichert werden.

Bei der Zubereitung des Lebensmittels kann dann die um den (gemittelte) Korrekturwert DTS korrigierte Referenztemperatur RT als Zieltemperatur verwendet werden.

Beispielsweise ist es möglich, dass nach einer vordefinierten Anzahl an Zubereitungen desselben Lebensmittels und/oder nach einer vordefinierten Anzahl an durchgeführten Rezepten, insbesondere nach drei oder mehr gleichen Zubereitungen/Rezepten, ein neuer (gemittelter) Korrekturwert DTS anhand der bestimmten Abweichungen elektronisch gespeichert wird bzw. den zuvor/zuletzt verwendeten/gespeicherten Korrekturwert DTS ersetzt.

Auf diese Weise kann eine Änderung bzw. ein Drift der Abweichung, beispielsweise als überwachtes Ereignis, erfasst werden und insbesondere bei Erreichen oder Überschreiten eines Grenzwertes ein neuer (gemittelter) Korrekturwert DTS automatisch den zuvor/zuletzt verwendeten/gespeicherten Korrekturwert DTS ersetzen.

Alternativ kann eine Mitteilung mit einer Aufforderung zur (manuellen) Durchführung des Korrekturvorgangs ergehen, wenn die Differenz des neuen (gemittelten) Korrekturwerts DTS zu dem vorherigen/zuletzt verwendeten/gespeicherten Korrekturwert DTS einen vordefinierten Grenzwert erreicht oder überschreitet.

Der automatische Korrekturvorgang bzw. die Bestimmung der Abweichung der Siedetemperatur ST von der Referenztemperatur RT während der Zubereitung wird vorzugsweise nur bei dafür geeigneten und vorzugsweise vordefinierten Rezepten/Lebensmitteln durchgeführt.

Insbesondere wird der Korrekturvorgang bzw. die Bestimmung der Abweichung nur dann durchgeführt, wenn das Lebensmittel wässrig ist bzw. einen vordefinierten Massenanteil, insbesondere von mindestens 50 %, von Wasser aufweist.

Zusätzlich oder alternativ kann den Rezepten und/oder Lebensmitteln eine (Meta-)Information, wie eine elektronisch gespeicherte Kennzeichnung/Eignung, zugeordnet sein, anhand derer automatisch entschieden wird, ob der (automatische) Korrekturvorgang bzw. die Bestimmung der Abweichung bei der Zubereitung des Lebensmittels durchgeführt wird.

Beispielsweise können Rezepte zur Zubereitung, insbesondere Kochen, von Reis, Nudeln, Kartoffeln und/oder Eiern, eine entsprechende (Meta-)Information enthalten.

Die (mathematischen) Zusammenhänge, Gleichungen, Tabellen und/oder Diagramme zur Ermittlung, Speicherung und/oder Auswertung des Korrekturwerts DTS, des Kalibierwerts DTF, der Siedetemperatur ST, des Temperaturgrenzwerts GT, der Referenztemperatur RT, des Grenzwerts für den Temperaturgradienten, des Grenzwerts für die Differenz zwischen der aktuellen oder gemittelten Abweichung und des vorherigen Korrekturwerts DTS, der Messwerte für die Heiztemperatur HT und/oder die Messtemperatur MT und/oder die Rezepte bzw. Rezeptdatenbank sind vorzugsweise elektronisch, beispielsweise als Funktionsgleichung oder Tabellen, in der Küchenmaschine 1, insbesondere der Datenverarbeitungseinrichtung 10R, und/oder der Zentraleinrichtung, besonders bevorzugt dem Datenspeicher 40, hinterlegt bzw. gespeichert.

Das vorschlagsgemäße Verfahren zeichnet sich dadurch aus, dass in einem optionalen Kalibriervorgang die Abweichung einer mittels des Temperaturelements 20T ermittelten Heiztemperatur HT zu einer mittels eines (geeichten) Kalibriergeräts 30 ermittelten Messtemperatur MT bestimmt und elektronisch gespeichert wird. Zusätzlich oder alternativ zum Kalibriervorgang wird in Abhängigkeit von einer Zustandsänderung und/oder einem Ereigniseintritt ein Nutzer zur Durchführung eines Korrekturvorgangs aufgefordert oder in Abhängigkeit von einem ausgewählten Rezept und/oder Lebensmittel der Korrekturvorgang automatisch bei der Zubereitung des Lebensmittels durchgeführt, um eine Abweichung der am Standort der Küchenmaschine 1 vorliegenden Siedetemperatur ST zu einer elektronisch gespeicherten Referenztemperatur automatisch als Korrekturwert DTS elektronisch zu speichern.

Der Korrekturwert DTS und/oder der Kalibrierwert DTF werden/wird dann vorzugsweise automatisch bei der Zubereitung des Lebensmittels berücksichtigt.

Auf diese Weise wird eine besonders genaue Temperaturmessung bzw. -regelung ermöglicht. Insbesondere können etwaige Fertigungstoleranzen der elektrischen und wärmeführenden Komponenten sowie die Höhe des Standorts über dem Meeresspiegel berücksichtigt werden, um eine besonders präzise Siedepunkteinstellung zu ermöglichen und zuverlässig einen Druckaufbau im Gefäß 20 zu verhindern.

Einzelne Aspekte, Merkmale und Verfahrensschritte bzw. -varianten der vorliegenden Erfindung können unabhängig voneinander, aber auch in beliebiger Kombination und/oder Reihenfolge realisiert werden.

Weitere, auch unabhängig und in beliebiger Kombination realisierbare Aspekte sind im Folgenden aufgelistet:

1. Verfahren zum Betreiben einer Küchenmaschine 1 zur Zubereitung eines Lebensmittels,

   wobei anhand einer Benutzereingabe über eine Benutzerschnittstelle 10U der Küchenmaschine 1 ein Rezept zur Zubereitung des Lebensmittels - insbesondere aus einer Rezeptdatenbank - ausgewählt wird,

   wobei anhand des ausgewählten Rezepts das Lebensmittel mittels der Küchenmaschine 1 zumindest teilweise automatisch zubereitet wird,

   dadurch gekennzeichnet,

   dass die Zubereitung ein Erhitzen des Lebensmittels auf die Siedetemperatur ST des Lebensmittels umfasst, wobei in Abhängigkeit vom ausgewählten Rezept und/oder Lebensmittel automatisch die Abweichung der Siedetemperatur ST von einer Referenztemperatur RT bestimmt wird.

2. Verfahren nach Aspekt 1, dadurch gekennzeichnet, dass während der Zubereitung der Temperaturgradient, insbesondere die Änderung des Temperaturgradienten, mit einem vordefinierten Grenzwert verglichen wird, um das Erreichen der vorliegenden Siedetemperatur ST zu identifizieren.

3. Verfahren nach einem der voranstehenden Aspekte, dadurch gekennzeichnet, dass die Abweichung der vorliegenden Siedetemperatur ST zu der Referenztemperatur RT automatisch als Korrekturwert DTS elektronisch gespeichert wird.

4. Verfahren nach einem der voranstehenden Aspekte, dadurch gekennzeichnet, dass der Korrekturwert DTS bei der (wiederholten) Zubereitung des Lebensmittels oder bei der Zubereitung eines anderen Lebensmittels automatisch berücksichtigt wird, wobei zum Erhitzen des Lebensmittels auf die Siedetemperatur ST die um den Korrekturwert DTS korrigierte Referenztemperatur RT als Zieltemperatur verwendet wird.

5. Verfahren nach einem der voranstehenden Aspekte, dadurch gekennzeichnet, dass bei der wiederholten Zubereitung des Lebensmittels anhand des Rezepts die Abweichung der identifizierten Siedetemperatur ST von der Referenztemperatur RT automatisch als weiterer Korrekturwert gespeichert wird, wobei ein Mittelwert der Korrekturwerte DTS bzw. ein gemittelter Korrekturwert DTS gebildet und bei der Zubereitung des Lebensmittels automatisch berücksichtigt wird, wobei zum Erhitzen des Lebensmittels auf die Siedetemperatur ST die um den Mittelwert bzw. den gemittelten Korrekturwert DTS korrigierte Referenztemperatur RT als Zieltemperatur verwendet wird.

6. Verfahren nach einem der voranstehenden Aspekte, dadurch gekennzeichnet, dass die Heizleistung des Heizsystems 20H während der Zubereitung des Lebensmittels bei oder nach Erreichen der Siedetemperatur ST bzw. der um den (gemittelten) Korrekturwert DTS korrigierten Referenztemperatur RT automatisch reduziert wird.

7. Verfahren nach einem der voranstehenden Aspekte, dadurch gekennzeichnet, dass die Abweichung nur bei vordefinierten Rezepten und/oder Lebensmitteln bestimmt wird.

8. Verfahren nach einem der voranstehenden Aspekte, dadurch gekennzeichnet, dass die Abweichung in Abhängigkeit von einer den Rezepten und/oder Lebensmitteln zugeordneten Information, insbesondere einer elektronisch gespeicherten Kennzeichnung, bestimmt wird.

9. Verfahren nach einem der voranstehenden Aspekte, dadurch gekennzeichnet, dass die Abweichung nur dann bestimmt wird, wenn das Lebensmittel einen vordefinierten Massenanteil, insbesondere von mindestens 50 %, von Wasser aufweist.

10. Verfahren nach einem der voranstehenden Aspekte, dadurch gekennzeichnet, dass die Küchenmaschine 1 eine Basisstation 10 aufweist, wobei unterschiedliche Gefäße 20 mit der Basisstation 10 verwendet werden, und/oder dass die Küchenmaschine 1 mit mehreren Gefäßen 20 betrieben wird.

11. Verfahren nach einem der voranstehenden Aspekte, dadurch gekennzeichnet, dass den Gefäßen 20 der jeweils bestimmte (gemittelte) Korrekturwert DTS der Siedetemperatur ST zugeordnet werden und/oder dass die Abweichung der vorliegenden Siedetemperatur ST zu der Referenztemperatur RT automatisch als gefäßspezifischer (gemittelter) Korrekturwert DTS elektronisch gespeichert wird.

12. Verfahren nach einem der voranstehenden Aspekte, dadurch gekennzeichnet, dass in Abhängigkeit von der Abweichung der identifizierten Siedetemperatur ST zu der Referenztemperatur RT bzw. vom (gemittelten) Korrekturwert DTS über eine Benutzerschnittstelle 10U der Küchenmaschine 1 eine Mitteilung mit einer Aufforderung zur manuellen Durchführung eines Korrekturvorgangs ergeht, wobei in dem Korrekturvorgang die am Standort der Küchenmaschine 1 vorliegende Siedetemperatur ST eines wässrigen Lebensmittels bestimmt wird.

13. Verfahren nach einem der voranstehenden Aspekte, dadurch gekennzeichnet, dass eine Mitteilung mit einer Aufforderung zur Durchführung des Korrekturvorgangs ergeht, wenn die Differenz des neuen (gemittelten) Korrekturwerts DTS zu einem vorherigen Korrekturwert DTS einen vordefinierten Grenzwert erreicht oder überschreitet.

14. Verfahren nach einem der voranstehenden Aspekte, dadurch gekennzeichnet, dass die Küchenmaschine 1 automatisch das verwendete Gefäß 20 identifiziert und den dem verwendeten Gefäß 20 zugeordneten bzw. gefäßspezifischen (gemittelten) Korrekturwert DTS bei der Zubereitung des Lebensmittels berücksichtigt.

15. Küchenmaschine 1 zur Zubereitung eines Lebensmittels,

wobei die Küchenmaschine 1 ein elektrisches Heizsystem 20H zum Erhitzen eines Gefäßes 20 aufweist,

dadurch gekennzeichnet,

dass die Küchenmaschine 1 zur Durchführung des Verfahrens nach einem der voranstehenden Aspekte ausgebildet ist.

**Bezugszeichenliste:**

| | | | | |
|---|---|---|---|---|
| 1 | Küchenmaschine | | | |
| 10 | Basisstation | 30 | Mess-/Kalibriergerät |
| 10A | Aufnahme | 30S | Temperatursensor |
| 10B | Eingabeeinrichtung | | |
| 10C | Netzkabel | 40 | Datenspeicher |
| 10D | Anzeigeeinrichtung | | |
| 10E | Elektromotor | A | Metallachse |
| 10K | Kommunikationseinrichtung | DTF | Kalibrierwert |
| 10M | Messeinrichtung | DTS | Korrekturwert |
| 10N | Netzteil | GT | Temperaturgrenzwert |
| 10R | Datenverarbeitungseinrichtung | HT | Heiztemperatur |
| 10S | Steuereinrichtung | MT | Messtemperatur |
| 10U | Benutzerschnittstelle | RT | Referenztemperatur |
| 10X | Erster elektrischer Anschluss | ST | Siedetemperatur |
| 10Y | Zweiter elektrischer Anschluss | t | Zeit |
| | | T | Temperatur |
| 20 | Gefäß | ZR | Zubereitungsraum |
| 20B | Boden | | |
| 20D | Deckel | | |
| 20H | Heizsystem | | |
| 20R | Rührer | | |
| 20W | Wandung | | |
| 20G | Griff | | |
| 20T | Temperaturelement | | |
| 20X | erster elektrischer Anschluss | | |
| 20Y | zweiter elektrischer Anschluss | | |
| 20Q | Heizeinrichtung | | |
| 20P | Heizplatte | | |

**Patentansprüche**

1.  Verfahren zum Kalibrieren eines elektrischen Heizsystems (20H) einer Küchenmaschine (1) zur Zubereitung eines Lebensmittels,

    wobei in einem Korrekturvorgang die am Standort der Küchenmaschine (1) vorliegende Siedetemperatur (ST) eines wässrigen Lebensmittels bestimmt wird, und
    wobei die Abweichung der Siedetemperatur (ST) zu einer Referenztemperatur (RT) automatisch als Korrekturwert (DTS) elektronisch gespeichert wird,
    **dadurch gekennzeichnet,**
    **dass** mittels der Küchenmaschine (1) automatisch ein Zustand und/oder ein Ereignis überwacht wird, um eine mögliche Änderung des Korrekturwertes (DTS) festzustellen, wobei in Abhängigkeit von der Überwachung über eine Benutzerschnittstelle (10U) der Küchenmaschine (1) eine Mitteilung mit einer Aufforderung zur Durchführung des Korrekturvorgangs ergeht, und/oder
    **dass** ein Kalibriervorgang zusätzlich zum Korrekturvorgang durchgeführt wird, wobei die Abweichung einer mittels eines Temperaturelements (20T) des Heizsystems (20H) ermittelten Heiztemperatur (HT) zu einer mittels eines Kalibriergeräts (30) ermittelten Messtemperatur (MT) bestimmt und als Kalibrierwert (DTF) elektronisch gespeichert wird.

2.  Verfahren nach Anspruch 1, **dadurch gekennzeichnet, dass** während des Korrekturvorgangs der Temperaturgradient, insbesondere die Änderung des Temperaturgradienten, mit einem vordefinierten Grenzwert verglichen wird, um das Erreichen der vorliegenden Siedetemperatur (ST) zu identifizieren.

3. Verfahren nach Anspruch 1 oder 2, **dadurch gekennzeichnet, dass** der Korrekturwert (DTS) die Abweichung zwischen der Referenztemperatur (RT) und der bei Erreichen der Siedetemperatur (ST) mittels des Temperaturelements (20T) ermittelten Heiztemperatur (HT) ist.

4. Verfahren nach einem der voranstehenden Ansprüche, **dadurch gekennzeichnet, dass** der Korrekturwert (DTS) bei der Zubereitung des Lebensmittels automatisch berücksichtigt wird, wobei zum Erhitzen des Lebensmittels auf die Siedetemperatur (ST) die um den Korrekturwert (DTS) korrigierte Referenztemperatur (RT) als Zieltemperatur verwendet wird.

5. Verfahren nach einem der voranstehenden Ansprüche, **dadurch gekennzeichnet, dass** die Heizleistung des Heizsystems (20H) während der Zubereitung des Lebensmittels bei oder nach Erreichen der Siedetemperatur (ST) bzw. der um den Korrekturwert (DTS) korrigierten Referenztemperatur (RT) automatisch reduziert wird.

6. Verfahren nach einem der voranstehenden Ansprüche, **dadurch gekennzeichnet, dass** bei Erreichen oder Überschreiten eines vordefinierten Temperaturgrenzwerts (GT) für die Heiztemperatur (HT) die Heizleistung des Heizsystems (20H) automatisch reduziert wird, vorzugsweise wobei der Temperaturgrenzwert (GT) automatisch in Abhängigkeit vom Korrekturwert (DTS) angepasst wird.

7. Verfahren nach einem der voranstehenden Ansprüche, **dadurch gekennzeichnet, dass** ein überwachter Zustand ein vordefiniertes Zeitintervall ist und/oder dass nach Ablauf eines vordefinierten Zeitintervalls die Aufforderung zur Durchführung des Korrekturvorgangs ergeht.

8. Verfahren nach einem der voranstehenden Ansprüche, **dadurch gekennzeichnet, dass** ein überwachter Zustand eine bestehende Datenverbindung der Küchenmaschine (1) und/oder ein überwachtes Ereignis eine neue Datenverbindung der Küchenmaschine (1) ist und/oder dass nach Aufbau einer neuen Datenverbindung die Aufforderung zur Durchführung des Korrekturvorgangs ergeht.

9. Verfahren nach einem der voranstehenden Ansprüche, **dadurch gekennzeichnet, dass** die Küchenmaschine (1) eine Basisstation (10) aufweist, wobei unterschiedliche Gefäße (20) mit der Basisstation (10) verwendet werden.

10. Verfahren nach Anspruch 9, **dadurch gekennzeichnet, dass** für jedes Gefäß (20) der Korrekturvorgang und/oder der Kalibriervorgang durchgeführt werden/wird.

11. Verfahren nach Anspruch 10, **dadurch gekennzeichnet, dass** den Gefäßen (20) der jeweils bestimmte Korrekturwert (DTS) der Siedetemperatur (ST) und/oder der jeweils bestimmte Kalibrierwert (DTF) zugeordnet werden.

12. Verfahren nach Anspruch 11, **dadurch gekennzeichnet, dass** die Küchenmaschine (1) automatisch das verwendete Gefäß (20) identifiziert und den dem verwendeten Gefäß (20) zugeordneten Korrekturwert (DTS) und/oder Kalibrierwert (DTF) bei der Zubereitung des Lebensmittels berücksichtigt.

13. Verfahren nach einem der Ansprüche 9 bis 12, **dadurch gekennzeichnet, dass** ein überwachter Zustand die Verwendung mit einem bereits identifizierten Gefäß (20) und/oder ein überwachtes Ereignis die erstmalige Verwendung mit einem neuen bzw. nicht identifizierten Gefäß (20) ist und/oder dass nach erstmaliger Identifikation eines Gefäßes (20) die Aufforderung zur Durchführung des Korrekturvorgangs und/oder Kalibriervorgangs ergeht.

14. Verfahren nach einem der voranstehenden Ansprüche, **dadurch gekennzeichnet, dass** in Abhängigkeit von einem ausgewählten Rezept und/oder Lebensmittel der Korrekturvorgang automatisch bei der Zubereitung des Lebensmittels durchgeführt wird.

15. Verfahren nach Anspruch 14, **dadurch gekennzeichnet, dass** der Korrekturvorgang nur bei vordefinierten Rezepten und/oder Lebensmitteln durchgeführt wird, vorzugsweise nur dann, wenn das Lebensmittel einen vordefinierten Massenanteil, insbesondere von mindestens 50 %, von Wasser aufweist.

16. Küchenmaschine (1) zur Zubereitung eines Lebensmittels,

wobei die Küchenmaschine (1) ein elektrisches Heizsystem (20H) zum Erhitzen eines Gefäßes (20) aufweist,
**dadurch gekennzeichnet,**
**dass** die Küchenmaschine (1) zur Durchführung des Verfahrens nach einem der voranstehenden Ansprüche ausgebildet ist, und/oder
**dass** die Küchenmaschine (1) eine Basisstation (10), mehrere Gefäße (20) für die Basisstation (10) und einen Datenspeicher (40) aufweist, wobei in dem Datenspeicher (40) für jedes Gefäß (20) ein Korrekturwert (DTS) für die Abweichung der vorliegenden Siedetemperatur (ST) zu einer Referenztemperatur (RT) und/oder ein Kalibrierwert (DTF) für die Abweichung der mittels eines Temperaturelements (20T) des Heizsystems (20H) ermittelten Heiztemperatur (HT) zu einer mittels eines Kalibriergeräts (30) ermittelten Messtemperatur (MT) gespeichert sind/ist.

Fig. 1

Fig. 2

Fig. 3

Fig. 4

Europäisches
Patentamt

European
Patent Office

Office européen
des brevets

## EUROPÄISCHER RECHERCHENBERICHT

**Nummer der Anmeldung**

EP 24 17 0838

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 832 275 A1 (VORWERK CO INTERHOLDING [DE]) 4. Februar 2015 (2015-02-04) * Absätze [0001], [0007], [0009], [0019], [0028]; Anspruch 1 * ----- | 1-16 | INV. A47J43/07 A47J36/32 |
| A | CN 113 229 720 A (VATTI CO LTD) 10. August 2021 (2021-08-10) ----- | 1-16 | |
| A | EP 3 143 914 B1 (VORWERK CO INTERHOLDING [DE]) 27. Mai 2020 (2020-05-27) ----- | 1-16 | |

**RECHERCHIERTE SACHGEBIETE (IPC)**

A47J

Der vorliegende Recherchenbericht wurde für alle Patentansprüche erstellt

| Recherchenort | Abschlußdatum der Recherche | Prüfer |
|---|---|---|
| Den Haag | 23. August 2024 | Schneider, Elias |

EPO FORM 1503 03.82 (P04C03)

Europäisches
Patentamt

European
Patent Office

Office européen
des brevets

**Nummer der Anmeldung**

EP 24 17 0838

---

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

---

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

    Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

    1-16(teilweise)

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 24 17 0838

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-16(teilweise)

   Mitteilung mit einer Aufforderung zur Durchführung des Korrekturvorgangs, wenn eine mögliche Änderung des Korrekturwertes (DTS) festgestellt wird
   ---

2. Ansprüche: 1-16(teilweise)

   Kalibrierung, wobei die Abweichung einer mittels eines Temperaturelements (20T) des Heizsystems (20H) ermittelten Heiztemperatur (HT) zu einer mittels eines Kalibriergeräts (30) ermittelten Messtemperatur (MT) bestimmt und als Kalibrierwert (DTF) elektronisch gespeichert wird
   ---

3. Anspruch: 16(teilweise)

   Bereitstellen von gefäßspezifischen Korrekturwerten (DTS/DTF) für die mehreren Gefäße der Küchenmaschine
   ---

**ANHANG ZUM EUROPÄISCHEN RECHERCHENBERICHT
ÜBER DIE EUROPÄISCHE PATENTANMELDUNG NR.**

EP 24 17 0838

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-08-2024

| Im Recherchenbericht angeführtes Patentdokument | Datum der Veröffentlichung | Mitglied(er) der Patentfamilie | Datum der Veröffentlichung |
|---|---|---|---|
| EP 2832275 A1 | 04-02-2015 | CN 104337416 A | 11-02-2015 |
| | | DE 102013108327 A1 | 05-02-2015 |
| | | EP 2832275 A1 | 04-02-2015 |
| CN 113229720 A | 10-08-2021 | KEINE | |
| EP 3143914 B1 | 27-05-2020 | AU 2016216620 A1 | 06-04-2017 |
| | | CN 107065634 A | 18-08-2017 |
| | | EP 3143914 A1 | 22-03-2017 |
| | | ES 2807562 T3 | 23-02-2021 |
| | | PL 3143914 T3 | 19-10-2020 |
| | | PT 3143914 T | 24-07-2020 |
| | | TW 201713256 A | 16-04-2017 |
| | | US 2017082996 A1 | 23-03-2017 |

EPO FORM P0461

Für nähere Einzelheiten zu diesem Anhang : siehe Amtsblatt des Europäischen Patentamts, Nr.12/82